(19)

Europäisches
Patentamt
European
Patent Office
Office européen
des brevets

(11) **EP 2 940 284 A1**

(12) **EUROPEAN PATENT APPLICATION**
published in accordance with Art. 153(4) EPC

(43) Date of publication:
**04.11.2015 Bulletin 2015/45**

(21) Application number: **13856114.7**

(22) Date of filing: **11.11.2013**

(51) Int Cl.:
*F02M 21/02* [(2006.01)]  *F02B 43/00* [(2006.01)]
*G01F 23/22* [(2006.01)]

(86) International application number:
**PCT/JP2013/080441**

(87) International publication number:
**WO 2014/080790 (30.05.2014 Gazette 2014/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.11.2012 JP 2012257688**

(71) Applicants:
• **Aisan Kogyo Kabushiki Kaisha**
**Obu-shi, Aichi 474-8588 (JP)**
• **TOYOTA JIDOSHA KABUSHIKI KAISHA**
**Toyota-shi, Aichi-ken, 471-8571 (JP)**

(72) Inventors:
• **SUGIURA, Masanori**
**Obu-shi**
**Aichi 474-8588 (JP)**

• **ODA, Hiroshi**
**Obu-shi**
**Aichi 474-8588 (JP)**
• **TAKASAKI, Jun**
**Obu-shi**
**Aichi 474-8588 (JP)**
• **SHIRASAWA, Hirotaka**
**Obu-shi**
**Aichi 474-8588 (JP)**

(74) Representative: **Westphal, Mussgnug & Partner**
**Patentanwälte mbB**
**Am Riettor 5**
**78048 Villingen-Schwenningen (DE)**

(54) **OIL STORAGE AMOUNT DETERMINATION DEVICE**

(57)      An oil storage amount determination device that determines the amount of oil stored in a tank (35), wherein the tank (35) is constructed such that a gaseous fuel that has been decompressed by a decompression valve (33) flow into the tank, a separation unit (36) that separates oil from the gaseous fuel is provided in the tank (35), and a temperature sensor (41) is supported in a side wall of the tank. This oil storage amount determination device is equipped with a determination unit (50) constructed so as to determine whether the temperature sensor (41) is immersed in the oil separated from the gaseous fuel by the separation unit (36). The determination unit (50) is constructed such that when the flow speed of the gaseous fuel flowing into the tank (35) changes, the determination unit determines whether the temperature sensor (41) is immersed in oil on the basis of the state of the change in the flow speed and the state of the change in the temperature detected by the temperature sensor (41).

Fig.2

**Description**

TECHNICAL FIELD

The technology of the present disclosure relates to an oil storage amount determination device that determines whether or not the amount of oil stored in a tank, which is arranged in a passage for supplying gas fuel to a combustion chamber of an internal combustion engine, is greater than or equal to a specified amount.

BACKGROUND ART

A supply system that supplies an internal combustion engine with gas fuel such as compressed natural gas (CNG) includes an oil separator and an oil storage amount determination device. The oil separator separates oil from the fuel gas with a separation unit and discharges the oil to a drain tank. The oil storage determination device determines whether or not the oil storage amount in the drain tank is greater than or equal to a specified amount. For example, patent document 1 discloses an oil storage amount determination device that uses an NTC thermistor attached to a side wall of the drain tank. Here, NTC stands for negative temperature coefficient.
The oil storage amount determination device described in patent document 1 is configured to determine whether or not the amount of engine oil stored in an oil pan, which is located below an engine and serves as a tank, is greater than or equal to a specified amount. The oil storage amount determination device includes a constant voltage circuit, which applies a predetermined voltage to the thermistor attached to the oil pan, and a determination circuit, which outputs a signal when the resistance of the thermistor becomes less than or equal to a predetermined value. The predetermined voltage is set so that the difference of the generated heat amount and the radiated heat amount rapidly decreases the resistance only when the thermistor is exposed to gas and, at the same time, the ambient temperature in the oil pan is greater than or equal to a predetermined temperature.
The resistance of the thermistor does not change much when the thermistor is immersed in the engine oil. Thus, the determination circuit does not output a signal, and it is determined that the storage amount of the engine oil is greater than or equal to the specified amount. In contrast, the resistance of the thermistor rapidly decreases when the thermistor is not immersed in the engine oil. Thus, the determination circuit outputs a signal, and it is determined that the storage amount of the engine oil is less than the specified amount.

PRIOR ART DOCUMENT

PATENT DOCUMENT

Patent Document 1: Japanese Laid-Open Patent Publication No. 5-312619

SUMMARY OF INVENTION

PROBLEMS THAT THE INVENTION IS TO SOLVE

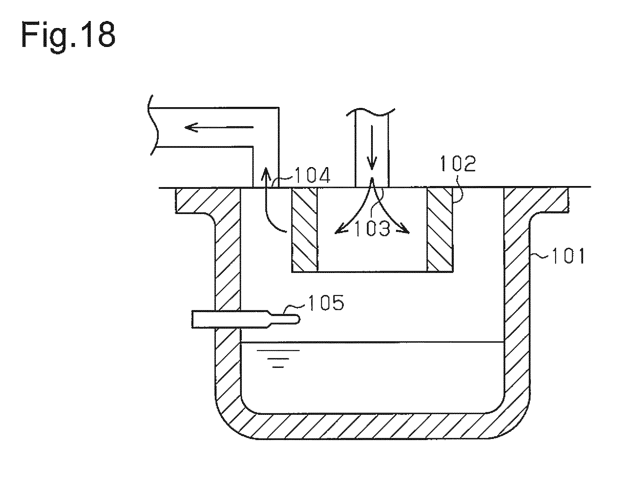

Referring to Fig. 18, a recently developed oil separator includes a drain tank 101 with a separation unit 102 located in an upper region. In such an oil separator, gas fuel flows into the drain tank 101 through an inlet 103. The oil separation unit 102 separates impurities such as oil from the gas fuel, which flows out of the drain tank 101 through an outlet 104. The impurities separated from the gas fuel are collected in the drain tank 101. When an engine using gas fuel is running, a flow of gas is produced in the drain tank 101, and the flow velocity changes in accordance with the traveling condition of the vehicle.
The oil storage amount determination device described in patent document 1 is used assuming a situation in which gas flow is not produced in a tank, such as an oil pan located below the engine, and that the flow velocity is constant in the tank. Thus, the use of the oil storage amount determination device in the supply system described above would result in the shortcomings described below.
When a thermistor 105 is not immersed in oil, the amount of heat radiated from the thermistor 105 is changed by the flow velocity of the gas fuel in the drain tank 101. Thus, a higher flow velocity of the gas fuel increases the amount of heat radiated from the thermistor 105, and the resistance of the thermistor 105 does not decrease as designed. Since the resistance of the thermistor 105 does not decrease that much, the determination circuit may not output a signal even though the thermistor 105 is actually not immersed in oil. In such a case, the amount of oil stored in the drain tank 101 is erroneously determined as having become greater than or equal to the specified amount.
It is an object of the present disclosure to provide an oil storage amount determination device that allows for accurate determination of whether or not a temperature sensor, which is supported by a side wall of a tank accommodating a separation unit that separates oil from gas fuel, is immersed in oil.

MEANS FOR SOLVING THE PROBLEM

One aspect of the present disclosure is an oil storage amount determination device that determines a storage amount of oil in a tank. The tank is configured to receive gas fuel that is depressurized by a pressure reduction valve, the tank includes a separation unit that separates oil from the fuel gas, and the tank includes a side wall that supports a temperature sensor. The oil storage amount determination device includes a determination unit configured to determine whether or not the temperature sensor is immersed in the oil separated from the gas fuel by the separation unit. The determination unit is configured to refer to how a flow velocity of the gas fuel changes and how a temperature detected by the temperature sensor changes to determine whether or not the temperature sensor is immersed in oil when the flow velocity of the gas fuel entering the tank changes.

BRIEF DESCRIPTION OF THE DRAWINGS

Fig. 1 is a schematic diagram showing an internal combustion engine, its peripheral structure, and a controller in a first embodiment.
Fig. 2 is a cross-sectional view of a regulator shown in Fig. 1 and schematically shows the structure of an oil storage amount determination device of the first embodiment.
Fig. 3 is an electric circuit block diagram of a detector shown in Fig. 2.
Fig. 4 is a flowchart (former half) showing the procedures for controlling the oil storage amount determination device of Fig. 2.
Fig. 5 is a flowchart (latter half) showing the procedures for controlling the oil storage amount determination device of Fig. 2.
Fig. 6 is a graph showing the relationship of the flow amount cumulation value and the temperature cumulation value in the first embodiment.
Fig. 7 is a timing chart showing changes in the thermistor temperature, the first smoothing temperature, and the second smoothing temperature in the first embodiment.
Fig. 8 is a flowchart showing the procedures for controlling an oil storage amount determination device in a second embodiment.
Fig. 9 is a timing chart showing changes in the vehicle velocity, the first smoothing temperature, and the second smoothing temperature when the thermistor is not immersed in oil in the second embodiment.
Fig. 10 is a timing chart showing changes in the flow amount cumulation value and the difference obtained by subtracting the second smoothing temperature from the first smoothing temperature when the thermistor is not immersed in oil in the second embodiment.
Fig. 11 is a timing chart showing changes in the vehicle velocity, the first smoothing temperature, and the second smoothing temperature when the thermistor is immersed in oil in the second embodiment.
Fig. 12 is a timing chart showing changes in the flow amount cumulation value and the difference obtained by subtracting the second smoothing temperature from the first smoothing temperature when the thermistor is immersed in oil in the second embodiment.
Fig. 13 is a graph showing the relationship of the flow amount cumulation value and the minimum difference value in the second embodiment.
Fig. 14 is a flowchart showing the procedures for controlling an oil storage amount determination device in a third embodiment.
Fig. 15 is a timing chart showing changes in the vehicle velocity, the CNG flow amount, and the thermistor temperature in the third embodiment.
Fig. 16 is a flowchart showing the procedures for controlling an oil storage amount determination device in a fourth embodiment.
Fig. 17 is a timing chart showing changes in the CNG flow amount, the thermistor temperature when the thermistor is not immersed in oil, and the thermistor temperature when the thermistor is immersed in oil in the fourth embodiment.
Fig. 18 is a cross-sectional view schematically showing the structure of an oil separator in the prior art.

EMBODIMENTS OF THE INVENTION

First Embodiment

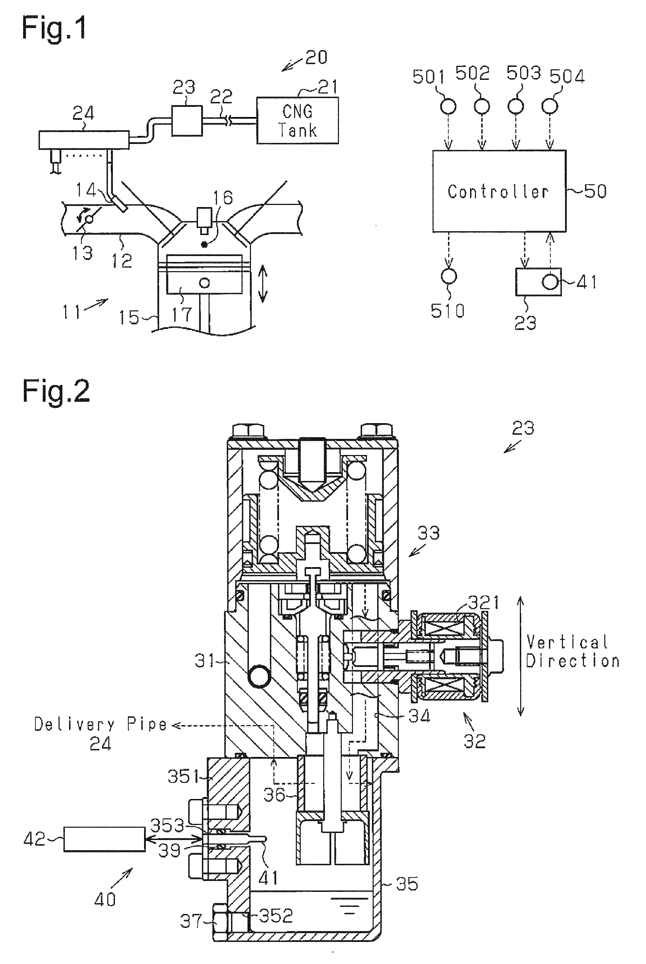

A first embodiment of an internal combustion engine that runs on compressed natural gas (CNG), which is one example of gas fuel, will now be described with reference to Figs. 1 to 7.

As shown in Fig. 1, an internal combustion engine 11 is provided with an intake passage 12 including a throttle valve 13 and an injector 14. The open degree of the throttle valve 13 is adjusted by an acceleration pedal, which is depressed by the driver. The injector 14 injects CNG supplied from a gas fuel supply system 20. An air-fuel mixture of the intake air drawn through the throttle valve 13 and the CNG injected from the injector 14 is burned in a combustion chamber 16 of a cylinder 15 to reciprocate a piston 17 and rotate a crankshaft (not shown), which is an output shaft of the internal combustion engine 11, in a predetermined rotation direction.

The gas fuel supply system 20 includes a CNG tank 21, which stores CNG, and a high-pressure fuel pipe 22, which is connected to the CNG tank 21. A regulator 23, which also functions as an oil separator, reduces the pressure of the gas fuel flowing through the high-pressure fuel pipe 22 to a specified fuel pressure and supplies the depressurized gas fuel to a delivery pipe 24. The injector 14 injects the CNG, which is supplied from the delivery pipe 24, into the intake passage 12.

A controller 50, which functions as an oil storage amount determination device, is electrically connected to an acceleration pedal depression amount sensor 501, which detects the amount the acceleration pedal (not shown) depressed by the driver, and a vehicle velocity sensor 502, which detects the vehicle velocity. The controller 50 is also connected to a crank position sensor 503, which detects the rotation speed of a crankshaft, and a tank pressure sensor 504, which detects the CNG tank pressure that is the pressure of the CNG tank 21.

The controller 50 includes a microcomputer, which is formed by a CPU, a ROM, and a RAM, and monitors the amount of oil stored in a drain tank of the regulator 23. When determining that the oil storage amount of the drain tank has exceeded a specified amount, the controller 50 activates a warning lamp 510 to notify the vehicle occupant of such a situation.

As shown in Fig. 2, the regulator 23 includes a body 31 connected to an electromagnetic shutting valve 32 into which CNG flows from the CNG tank 21. When instructed by the controller 50 to supply power to an electromagnetic coil 321, the electromagnetic shutting valve 32 allows CNG to be supplied to the delivery pipe 24. In this case, the CNG that passes through the electromagnetic shutting valve 32 flows into the body 31. When the electromagnetic coil 321 is not supplied with power, the electromagnetic shutting valve 32 restricts the supply of CNG to the delivery pipe 24.

The regulator 23 includes a pressure reduction valve 33 that depressurizes the CNG flowing into the body 31 through the electromagnetic shutting valve 32 to a specified fuel pressure. The CNG depressurized by the pressure reduction valve 33 flows through a passage 34 extending through the body 31 and into a drain tank 35. The drain tank 35, which is tubular and has a closed end, is coupled to the lower end of the body 31. In this manner, CNG, the temperature of which has been decreased when depressurized by the pressure reduction valve 33, flows into the drain tank 35.

The body 31 is coupled to the drain tank 35 so as to close the opening of the drain tank 35. An annular element 36, which is one example of a separation unit, separates oil from the CNG entering the drain tank 35 through the passage 34. The element 36 is formed by a nonwoven fabric that allows for the passage of gas such as CNG, while restricting the passage of liquid such as oil. The CNG that passes through the element 36 is guided to the delivery pipe 24 through a supply passage (not shown) formed in the body 31. The oil separated from the CNG by the element 36 falls from the element 36 and is stored in the drain tank 35.

The drain tank 35 has a side wall 351 including a lower end region provided with an opening 352 that connects the inner and outer sides of the drain tank 35. The opening 352 is closed by a manual valve 37. When the valve 37 is removed from the drain tank 35 to open the opening 352, oil is discharged from the drain tank 35 through the opening 352.

The gas fuel supply system 20 includes a detector 40 that detects the amount of oil stored in the drain tank 35. The detector 40 includes a thermistor 41, which is one example of a temperature sensor, and an electric circuit 42, which supplies power to the thermistor 41. A communication hole 353, which connects the inner and outer sides of the drain tank 35, is formed at a location lower than the element 36 in the side wall 351 of the drain tank 35. The thermistor 41 is fitted into the communication hole 353 so that the distal end of the thermistor 41 is located in the drain tank 35. An 0 ring 39, which serves as a heat insulator having a hermetic property and a thermal insulation property, is located between the outer surface of the thermistor 41 and the wall surface of the communication hole 353.

Preferably, the thermistor 41 is a thermistor in which self-heat-generation is limited. An example of such a thermistor is a chip-type thermistor in which the resistance is 20 k$\Omega$ and the B-constant change rate is 3930 K at 25°C.

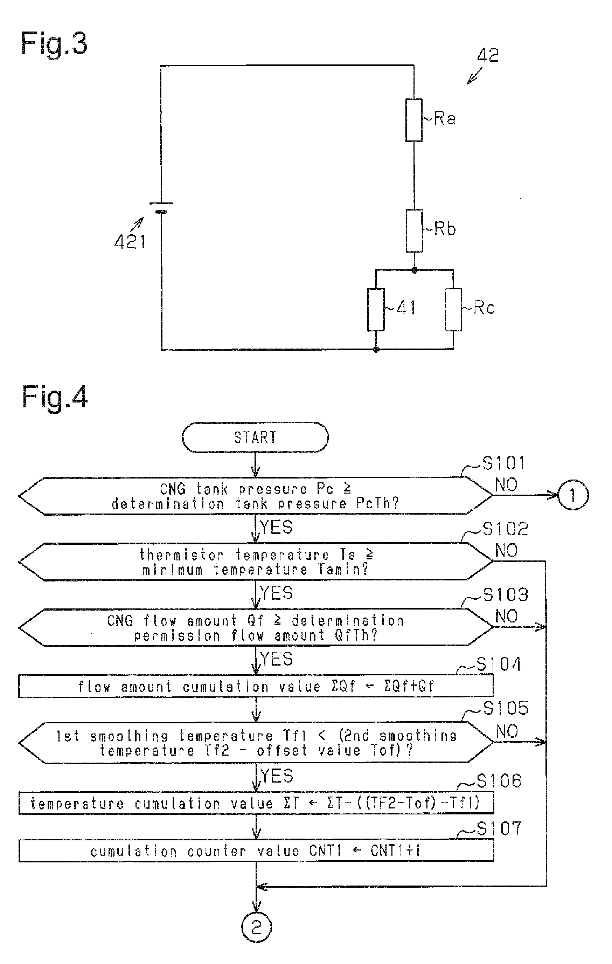

As shown in Fig. 3, the electric circuit 42 includes a power supply 421 of DC 5V. A power supply line leading to the thermistor 41 includes a first resistor Ra and a second resistor Rb, which are connected in series to the thermistor 41, and a third resistor Rc, which is connected in parallel to the thermistor 41. In the present embodiment, the first resistor Ra has a resistance of 22 k$\Omega$, the second resistor Rb has a resistance of 2 k$\Omega$, and the third resistor Rc has a resistance of 22 kΩ. The temperature of the thermistor 41 at where the thermistor 41 is located, namely, the thermistor temperature Ta, is computed from the detection signal output from the thermistor 41 (i.e., voltage for thermistor).

When the engine is running, CNG is supplied from the CNG tank 21 to the injector 14. Thus, CNG flows above the liquid level of the oil in the drain tank 35. Moreover, when the open degree of the throttle valve 13 is increased, such as when the vehicle is accelerating, the amount of CNG injected from the injector 14 increases the flow velocity of the CNG in the drain tank 35. As the flow amount of the CNG increases in such a situation, since the pressure reduction valve 33 depressurizes and lowers the temperature of the CNG, the amount of heat radiated from the thermistor 41 increases. Thus, the thermistor temperature Ta detected by the thermistor 41 easily becomes low.

As long as the thermistor 41 is immersed in oil even when the flow amount increases, the thermistor 41 is not much affected by changes in the flow amount of the CNG compared to when the thermistor 41 is not immersed in oil. This is because a thermistor in which self-heat-generation is limited is used as the detection thermistor 41. As a result, the thermistor temperature Ta does not easily change compared to when the thermistor 41 is not immersed in oil. However, when the flow velocity of the CNG is extremely high in the drain tank 35, the CNG greatly cools the drain tank 35. This cools the oil stored in the drain tank 35. Further, the flow of CNG in the drain tank 35 may result in convection of the oil in the drain tank 35. Thus, a change in the flow velocity of the CNG may change the thermistor temperature Ta.

In the present embodiment, when the flow velocity of the CNG changes, a determination process is performed to determine whether or not the thermistor 41 is immersed in oil, that is, whether or not there is a probability that the oil storage amount of the drain tank 35 is greater than or equal to a specified amount based on how the flow velocity changes and how the thermistor temperature Ta changes.

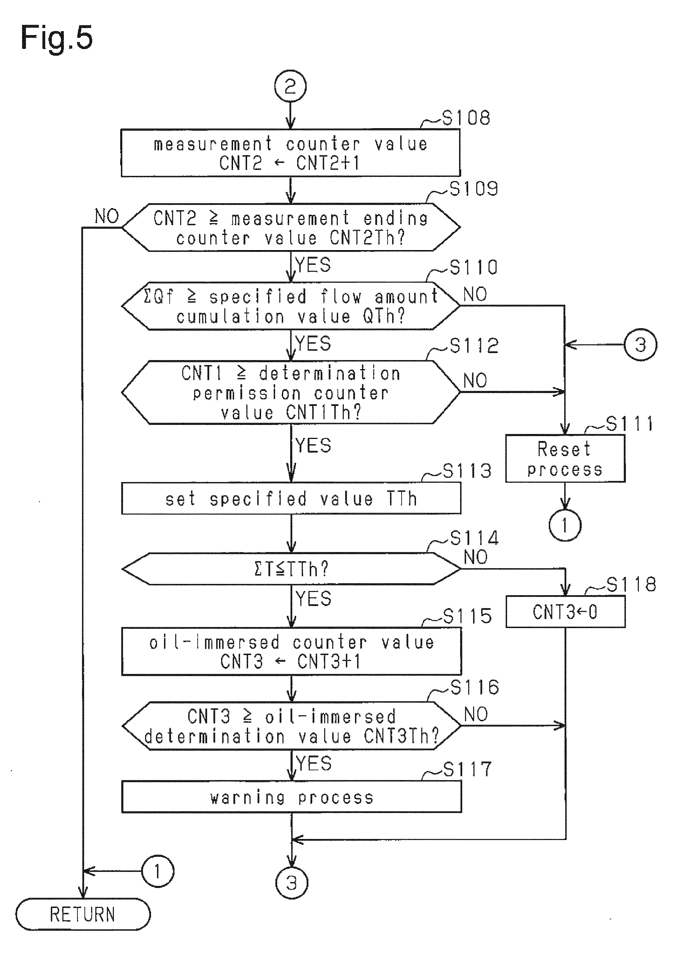

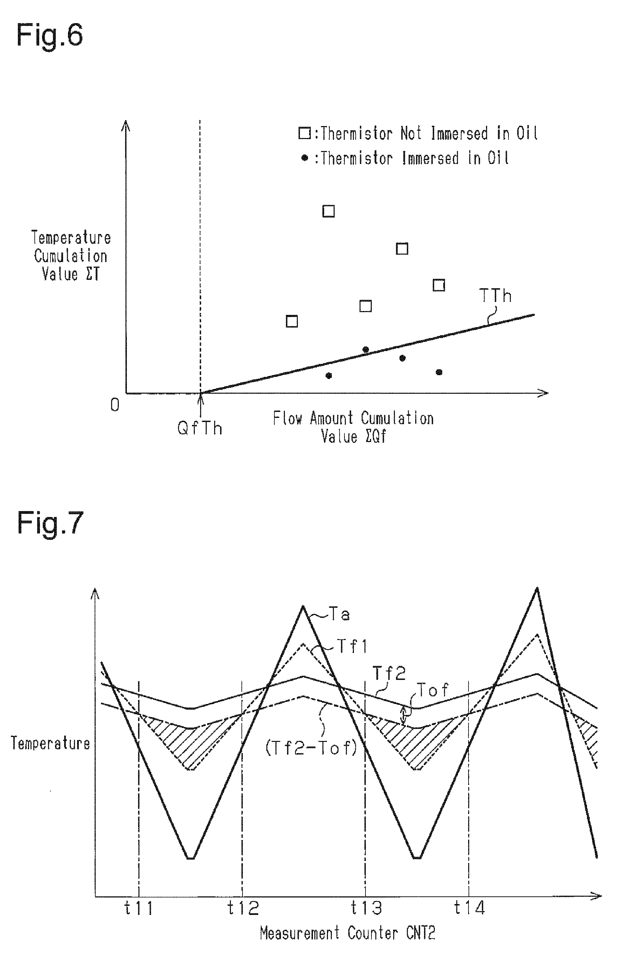

With reference to the flowcharts shown in Figs. 4 and 5 and the graph shown in Fig. 6, a routine executed by the controller 50 to determine whether or not the oil storage amount of the drain tank 35 is greater than or equal to the specified amount will now be described.

The routine shown in Figs. 4 and 5 is executed in preset cycles (e.g., every ten milliseconds). In the routine, the controller 50 determines whether or not the CNG tank pressure Pc, which is the pressure of the CNG tank 21 detected from the output signal of the tank pressure sensor 504, is greater than or equal to a preset determination tank pressure PcTh (step S101).

In the present embodiment, the pressure reduction valve 33 depressurizes and lowers the temperature of the CNG that flows into the drain tank 35. Thus, when the CNG tank pressure PC is not that high, the pressure of the CNG is low when entering the regulator 23. As a result, the pressure reduction valve 33 does not depressurize the CNG that much, and the temperature of the CNG may not become that low during the depressurization stage. In this case, even if the flow amount of the CNG increases when the thermistor 41 is not immersed in oil, the thermistor temperature Ta detected from the output signal of the thermistor 41 does not change much. This may lower the determination accuracy of the determination process. Hence, the determination tank pressure PcTh is set so that the determination accuracy of the determination process does not become low.

When the CNG tank pressure PC is less than the determination tank pressure PcTh (step S101: NO), the controller 50 temporarily terminates the present routine without performing the determination process. When the CNG tank pressure PC is greater than or equal to the determination tank pressure PcTh (step S101: YES), the controller 50 determines whether or not the thermistor temperature Ta detected by the thermistor 41 is greater than or equal to a preset minimum temperature Tamin (e.g., 60°C) in step S102.

If the thermistor temperature Ta, which is the ambient temperature in the drain tank 35, is relatively low when the thermistor 41 is not immersed in oil, the thermistor temperature Ta does not become low even if the CNG, of which the temperature is low due to the depressurization by the pressure reduction valve 33, flows into the drain tank 35. Thus, the minimum temperature Tamin is set to a value that allows for the determination of whether or not the present situation is in such a condition.

When the thermistor temperature Ta is less than the minimum temperature Tamin (step S102: NO), the controller 50 proceeds to step S108, which will be described below. When the thermistor temperature Ta is higher than or equal to the minimum temperature Tamin (step S102: YES), the controller 50 determines whether or not the CNG flow amount Qf, which is the flow amount of the CNG flowing into the drain tank 35, is greater than or equal to a preset determination permission flow amount QfTh (step S103).

When the CNG flow amount Qf is low, changes are limited in the thermistor temperature Ta even when the thermistor 41 is not immersed in oil. Thus, the determination permission flow amount QfTh is set to a value that allows for the determination of whether or not changes are limited in the thermistor temperature Ta under the present situation.

The CNG flow amount Qf may be estimated from the output signal of the vehicle velocity sensor 502 and the open degree of the throttle valve 13. When the flow amount of the intake air flowing through the intake passage 12 can be detected, the CNG flow amount Qf may be calculated from the flow amount of the intake air.

When the CNG flow amount Qf is less than the determination permission flow amount QfTh (step S103: NO), the controller 50 proceeds to step S108, which will be described later. When the CNG flow amount Qf is greater than or equal to the determination permission flow amount QfTh (step S103: YES), the controller 50 performs a cumulating process for cumulating the CNG flow amount in predetermined cycles to obtain a flow amount cumulation value $\Sigma Qf$ (step S104). Thus, the controller 50 of the present embodiment functions as a flow amount cumulation unit.

Then, the controller 50 acquires a first smoothing temperature Tf1 and a second smoothing temperature Tf2. The first smoothing temperature Tf1 and the second smoothing temperature Tf2 are values smoothened to have different delays from changes in the thermistor temperature Ta. Thus, the controller 50 of the present embodiment functions as a smoothing processor configured to obtain the first smoothing temperature Tf1 and the second smoothing temperature Tf2.

The first smoothing temperature Tf1 and the second smoothing temperature Tf2 are calculated using relational equations (1) and (2), which are shown below. In relational equations (1) and (2), "Tf1(n-1)" and "Tf2(n-1)" are smoothing temperatures calculated in the previous cycle, and "Tf1 (n)" and "Tf2(n)" are smoothing temperatures calculated in the present cycle. Further, "Ta(n)" is the thermistor temperature Ta detected in the present cycle, and "Ta(n-1)" is the thermistor temperature Ta detected in the previous cycle. Coefficient "K1" is an integer (e.g., 10) that is greater than "1" and smaller than "K2 (e.g., 200)."

$$Tf1(n)=Tf1(n-1)+(Ta(n)-Ta(n-1))/K1 \qquad \text{equation (1)}$$

$$Tf2(n)=Tf2(n-1)+(Ta(n)-Ta(n-1))/K2 \qquad \text{equation (2)}$$

The controller subtracts a preset offset value Tof (>0 (zero)) from the second smoothing temperature Tf2 to calculate a corrected value and determines whether or not the corrected value is greater than the first smoothing temperature (step S105). When the corrected value is less than or equal to the first smoothing temperature (step S105: NO), the controller 50 proceeds to step S108.

When the corrected value (Tf2-Tof) is greater than the first smoothing temperature Tf1 (step S105: YES), the controller 50 subtracts the first smoothing temperature Tf1 from the corrected value to calculate the difference and cumulates the difference to obtain the temperature cumulation value $\Sigma T$ (step S106). Thus, the controller 50 of the present embodiment functions as a temperature cumulation unit configured to cumulate the difference of the corrected value and the first smoothing temperature Tf1 and obtain the temperature cumulation value $\Sigma T$. Then, the controller 50 increments a cumulation counter value CNT1, which is the number of times the difference of the corrected value and the first smoothing temperature Tf1 has been cumulated, by "1" (step S107) and proceeds to step S108. The cumulation counter value CNT1 corresponds to the total value of the executed time (calculation execution time) for calculating the temperature cumulation value $\Sigma T$.

In step S108, the controller 50 increments a measurement counter value CNT2 by "1." The controller 50 determines whether or not the updated measurement counter value CNT2 is greater than or equal to a preset measurement ending counter value CNT2Th (step S109). The measurement ending counter value CNT2Th corresponds to a measurement time (e.g., ten minutes) used to perform a single determination process. When the measurement counter value CNT2 is less than the predetermined measurement ending counter value CNT2Th (step S109: NO), the controller 50 temporarily terminates the present routine to continue the calculation of the flow amount cumulation value $\Sigma Qf$ and the temperature cumulation value $\Sigma T$. When the measurement counter value NT2 is greater than or equal to the predetermined measurement ending counter value CNT2Th (step S109: YES), the controller 50 determines whether or not the present flow amount cumulation value $\Sigma Qf$ is greater than or equal to a preset specified flow amount cumulation value OTh (step S110).

When the flow amount cumulation value $\Sigma Qf$ is small, it can be estimated that the flow amount of CNG is not that large until the measurement counter value CNT2 becomes greater than or equal to the measurement ending counter value CNT2h. Thus, even when the thermistor 41 is not immersed in oil, the thermistor temperature Ta may not change greatly. Accordingly, the specified flow amount cumulation value OTh is set so that the determination process is not performed in such a case.

When the flow amount cumulation value $\Sigma Qf$ is less than the specified flow amount cumulation value OTh (step S110: NO), the controller 50 performs a reset process that resets the flow amount cumulation value $\Sigma Qf$, the temperature cumulation value $\Sigma T$, the cumulation counter value CNT1, and the measurement counter value CNT2 to "0 (zero)" so that the determination process is not performed (step S111). Then, the controller 50 temporarily terminates the present routine.

When the flow amount cumulation value $\Sigma Qf$ is greater than or equal to the specified flow amount cumulation value OTh (step S110: YES), the controller 50 determines in step S112 whether or not the cumulation counter value CNT1 updated in step S107 is greater than or equal to a determination permission counter value CNT1Th, which corresponds to a preset cumulation counter value (e.g., 90 seconds). To increase the determination accuracy of the determination process, it is preferred that the number of samples be increased for the parameters used in the determination. In this case, it is presumed that the determination accuracy is apt to increase when the number of times the process of step S106 is executed is increased. The determination permission counter value CNT1Th is set as a reference for determining whether or not step S106 has been executed many times.

When the cumulation counter value CNT1 is less than the determination permission counter value CNT1Th (step S112: NO), the controller 50 proceeds to step S111, which has been described above, so that the determination process is not performed. When the cumulation counter value CNT1 is greater than or equal to the determination permission counter value CNT1Th (step S112: YES), the controller 50 sets a specified cumulation value TTh, which is used in the determination process (step S113).

As shown in Fig. 6, when the flow amount cumulation value $\Sigma Qf$ is large, the specified cumulation value TTh is set to a value that is larger than when the flow amount cumulation value $\Sigma Qf$ is small. In the present embodiment, the specified cumulation value TTh increases in proportion to an increase in the flow amount cumulation value $\Sigma Qf$. Preferably, the increase gradient of the specified cumulation value TTh relative to the flow amount cumulation value $\Sigma Qf$ is set so that the temperature cumulation value $\Sigma T$ does not become less than the specified cumulation value TTh when the thermistor 41 is not immersed in oil.

Returning to the flowchart of Fig. 5, after step S113 is executed, the controller 50 determines whether or not the temperature cumulation value $\Sigma T$ calculated in step S106 is less than or equal to the specified cumulation value TTh set in step S113 (step S114). When the temperature cumulation value $\Sigma T$ calculated in step S106 is less than or equal to the specified cumulation value TTh (step S114: YES), it may be determined that there is a possibility of the thermistor 41 being immersed in oil. Thus, the controller 50 increments an oil-immersed counter value CNT3 by "1" (step S115). Thus, the controller 50 of the present embodiment functions as a determination unit, and the determination unit is configured to determine whether or not the thermistor 41 is immersed in oil from the temperature cumulation value $\Sigma T$ when the cumulation counter value CNT1 is greater than or equal to the determination permission counter value CNT1Th.

The controller 50 determines whether or not the updated oil-immersed oil counter value CNT3 is greater than or equal to an oil-immersed determination value CNT3Th (e.g., 5) in step S116. When the oil-immersed oil counter value CNT3 is less than the oil-immersed determination value CNT3Th (step S116: NO), the controller 50 proceeds to step S111, which has been described above. When the oil-immersed oil counter value CNT3 is greater than or equal to the oil-immersed determination value CNT3Th (step S116: YES), the controller 50 performs a warning process that activates the warning lamp 510 to notify the vehicle occupant that the oil storage amount of the drain tank 35 is greater than or equal to the specified amount (step S117) and then proceeds to step S111, which has been described above.

When the temperature cumulation value $\Sigma T$ is greater than the specified cumulation value TTh (step S114: NO), the controller 50 resets the oil-immersed counter value CNT3 to "0 (zero)" in step S118 and then proceeds to step S111, which has been described above.

The operation when determining whether or not the thermistor 41 is immersed in oil will now be described with reference to the timing chart of Fig. 7. It is assumed here that the CNG tank pressure Pc is greater than or equal to the determination tank pressure PcTh, the thermistor temperature Ta is greater than or equal to the minimum temperature Tamin, and the CNG flow amount Of is greater than or equal to the determination permission flow amount QfTh.

Referring to Fig. 7, even when the measurement counter value CNT2 is updated, prior to a first timing t11, the first smoothing temperature Tf1 is greater than or equal to a corrected value obtained by subtracting the offset value Tof from the second smoothing temperature Tf2. Thus, the temperature cumulation value $\Sigma T$ is not calculated. However, during the period from the first timing t11 to a second timing t12, the first smoothing temperature Tf1 is less than the corrected value. Thus, the difference obtained by subtracting the first smoothing temperature Tf1 from the corrected value is cumulated. That is, during this period, as the elapsed time of the temperature cumulation value $\Sigma T$ increases, the cumulation counter value CNT1 is updated in predetermined cycles.

From the second timing t12, the first smoothing temperature Tf1 is greater than or equal to the corrected value. Thus, the calculation of the temperature cumulation value $\Sigma T$ and the updating of the cumulation counter value CNT1 are interrupted until a third timing t13. During the period from the second timing t12 to the third timing t13, the temperature cumulation value $\Sigma T$ and the cumulation counter value CNT1 are each sustained at the value taken when reaching the second timing t12, and the calculation of the flow amount cumulation value $\Sigma Qf$ is continued.

Then, when reaching the third timing t13, the first smoothing temperature Tf1 is less than the corrected value. Thus, during a period from the third timing t13 to a fourth timing t14, at which the first smoothing temperature Tf1 becomes greater than or equal to the corrected value, the updating of the temperature cumulation value $\Sigma T$ and the cumulation counter value CNT1 is restarted.

When the measurement counter value CNT2 becomes greater than or equal to the measurement ending counter value CNT2Th, the updating of the temperature cumulation value $\Sigma T$ and the cumulation counter value CNT1 is terminated. Further, the updating of the flow amount cumulation value $\Sigma Qf$ is also terminated. The cumulation counter value CNT1 at this point of time is a value corresponding to the total value of the execution time of the calculation of the temperature cumulation value $\Sigma T$, that is, the cumulation of the difference obtained by subtracting the first smoothing temperature Tf1 from the corrected value. When the flow amount cumulation value $\Sigma Qf$ is greater than or equal to the specified flow amount cumulation value QTh and the cumulation counter value CNT1 is greater than or equal to the determination permission counter value CNT1Th, the determination process is performed. When the temperature cumulation value $\Sigma T$ is less than or equal to the specified cumulation value TTh, the oil-immersed counter value CNT2 is incremented by "1." Then, the temperature cumulation value $\Sigma T$, the flow amount cumulation value $\Sigma Qf$, the cumulation counter value CNT1, and the measurement counter value CNT2 are each reset to "0 (zero)."

Such a determination process is repeated during the period the internal combustion engine 11 is running. While the determination process is repetitively executed, when the oil-immersed counter value CNT3 becomes greater than or equal to the oil-immersed determination value CNT3Th, the warning lamp 510 is activated. The warning lamp 510 is not activated when the oil-immersed counter value CNT3 is less than the oil-immersed determination value CNT3Th or when the oil-immersed counter value CNT3 is reset to "0 (zero)."

The present embodiment has the advantages described below.

(1) Under a situation in which the CNG flow amount Qf in the drain tank 35 changes, the thermistor temperature Ta easily changes when the thermistor 41 is not immersed in oil as compared to when the thermistor 41 is immersed in oil. In addition, when the thermistor 41 is not immersed in oil, changes in the thermistor temperature Ta are greater when the CNG flow amount Qf changes greatly. Thus, in the present embodiment, under a situation in which the CNG flow amount Qf changes, the determination process is performed based on how the CNG flow amount Qf changes and how the thermistor temperature Ta changes. This allows for accurate determination of whether or not the thermistor 41 is immersed in oil when a flow of CNG is produced in the drain tank 35.

(2) When the thermistor 41 is immersed in oil, the thermistor temperature Ta does not change much even when the CNG flow amount Qf changes. Thus, the difference between the first smoothing temperature Tf1 and the second smoothing temperature Tf2 remains small. When the thermistor 41 is not immersed in oil, under a situation in which the CNG flow amount Qf changes, an increase in the speed of the change increases the difference between the first smoothing temperature Tf1 and the second smoothing temperature Tf2. Thus, by using the difference, more specifically, the difference of the corrected value, which is obtained by subtracting the offset value Tof from the second smoothing temperature Tf2, and the first smoothing temperature Tf1, the determination of whether or not the thermistor 41 is immersed in oil may be accurately determined.

(3) The present embodiment focuses on the fact that when CNG that has a low temperature flows into the drain tank 35, an increase in the CNG flow amount Qf greatly changes the thermistor temperature Ta detected by the thermistor 41 that is not immersed in oil. When the flow amount cumulation value $\Sigma Qf$ is greater than or equal to the specified flow amount cumulation value QTh and the cumulation counter value CNT1 is greater than or equal to the determination permission counter value CNT1Th, it may be assumed that a large amount of CNG is flowing into the drain tank 35 and that there are many samples of the difference used to calculate the temperature cumulation value $\Sigma T$. In such a case, by performing the determination process with the temperature cumulation value $\Sigma T$, the determination of whether or not the thermistor 41 is immersed in oil may be determined with high accuracy.

(4) Under a situation in which the thermistor 41 is not immersed in oil, the temperature cumulation value $\Sigma T$ is apt to decrease as the flow amount cumulation value $\Sigma Qf$ decreases. Thus, the specified cumulation value TTh is set to a larger value when the flow amount cumulation value $\Sigma Qf$ is large than when the flow amount cumulation value $\Sigma Qf$ is small. As a result, when the thermistor 41 is not immersed in oil, the temperature cumulation value $\Sigma T$ does not easily become less than or equal to the specified cumulation value TTh. This decreases the possibility in which the thermistor 41 is erroneously determined as being immersed in oil.

(5) Under a situation in which the pressure of the CNG reduced by the pressure reduction valve 33 is small and the CNG flowing into the drain tank 35 thus has a relatively high temperature, the decrease in the thermistor temperature Ta is limited even when the thermistor 41 is not immersed in oil. In the present embodiment, when the CNG tank pressure Pc is less than the determination tank pressure PcTh, the determination process is not performed. This decreases the possibility in which the thermistor 41 is erroneously determined as being immersed in oil when the thermistor 41 is not immersed in oil.

(6) When the thermistor temperature Ta is sufficiently low, that is, when the temperature of the drain tank 35 is low, the thermistor temperature Ta detected by the thermistor 41 that is not immersed in oil does not easily become low even when the CNG entering the drain tank 35 has a low temperature. Such a situation decreases the determination accuracy of the determination process. In the present embodiment, the determination process is not performed when the thermistor temperature Ta is less than the minimum temperature Tamin. This decreases the possibility in which the thermistor 41 is erroneously determined as being immersed in oil when the thermistor 41 is not immersed in oil.

(7) When the oil-immersed counter value CNT3 is successively updated, the warning lamp 510 is activated. Thus, in contrast with when the warning lamp 510 is activated just by a single update of the oil-immersed counter value CNT3, activation of the warning lamp 510, or erroneous warning given to the vehicle occupant, is limited when the oil storage amount of the drain tank 35 is less than the specified amount.

Second Embodiment

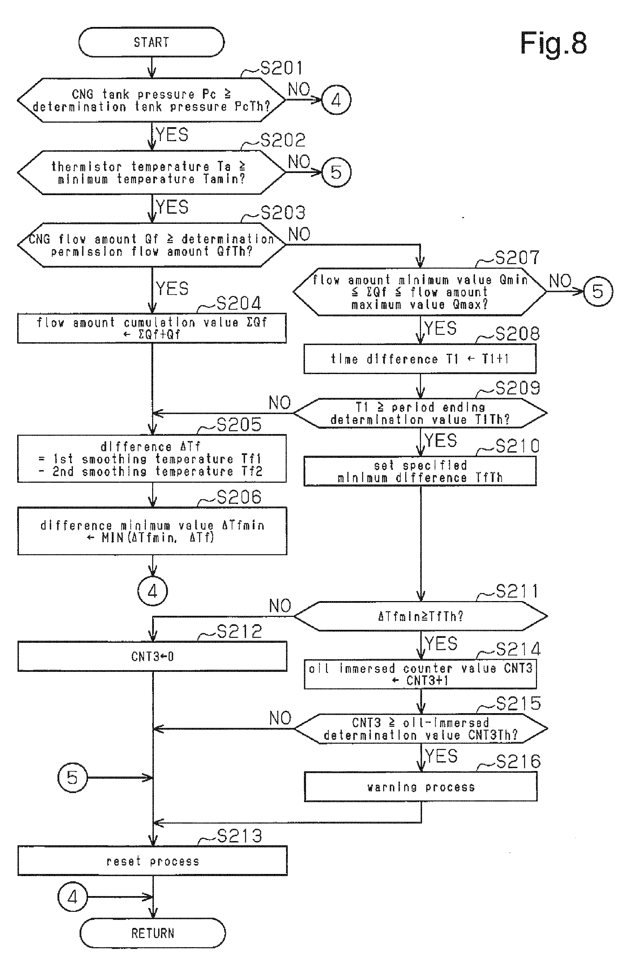

A second embodiment will now be described with reference to Figs. 8 to 13. The second embodiment differs from the first embodiment in the contents of the routine performed by the controller 50. The description hereafter will focus on the differences from the first embodiment. Same reference numerals are given to those components that are the same as the corresponding components of the first embodiment. Such components will not be described.
The routine executed by the controller 50 will now be described with reference to Fig. 8.
The routine shown in Fig. 8 is executed in preset cycles. In the routine, when the CNG tank pressure Pc is less than the determination tank pressure PcTh (step S201: NO), the controller 50 temporarily terminates the present routine. When the CNG tank pressure Pc is greater than or equal to the determination tank pressure PcTh (step S201: YES), the controller 50 proceeds to step S202. In step S202, when the thermistor temperature Ta is less than the minimum temperature Tamin (step S202: NO), the controller 50 proceeds to step S213, which will be described below. When the thermistor temperature Ta is greater than or equal to the minimum temperature Tamin (step S202: YES), the controller 50 proceeds to step S203.
In step S203, the controller 50 determines whether or not the CNG flow amount Qf in the drain tank 35 is greater than or equal to the determination permission flow amount QfTh. When the CNG flow amount Qf is greater than or equal to the determination permission flow amount QfTh (step S203: YES), the controller 50 performs a cumulation process for cumulating the CNG flow amount Qf, which is acquired in predetermined cycles, and obtains the flow amount cumulation value $\Sigma Qf$. Thus, the controller 50 of the present embodiment functions as a flow amount cumulation unit.
Then, the controller 50 subtracts the second smoothing temperature Tf2, which is calculated using relational equation (2), from the first smoothing temperature Tf1, which is calculated using relational equation (1), to obtain a difference $\Delta Tf$ (step S205). Thus, the controller 50 of the present embodiment also functions as a difference calculation unit. Then, the controller 50 updates a difference minimum value $\Delta Tfmin$, which serves as a minimum difference (step S206). More specifically, the controller 50 compares the present difference minimum value $\Delta Tfmin$ with the difference $\Delta Tf$ obtained in the present cycle and sets the smaller one as the new difference minimum value $\Delta Tfmin$. Then, the controller 50 temporarily terminates the present routine.
When the CNG flow amount Qf is less than the determination permission flow amount QfTh (step S203: NO), the controller 50 determines whether or not the present flow amount cumulation value $\Sigma Qf$ is greater than or equal to a flow amount minimum value Omin, which serves as a specified flow along cumulation value, and less than or equal to a flow amount maximum value Omax (step S207). In the present embodiment, the period from when the determination result of step S203 becomes "YES" to when the determination result of step S203 becomes "NO" and, at the same time, the determination result of step S207 becomes "YES" corresponds to a "period in which the CNG flow amount Qf is greater than or equal to the determination permission flow amount QfTh and the flow amount cumulation value $\Sigma Qf$ is greater than or equal to the flow amount minimum value Omin."
The flow amount cumulation value $\Sigma Qf$ may be too large when the vehicle is continuously accelerated over a long period. In this case, a large amount of CNG having a low temperature may flow into the drain tank 35 over a long period. Thus, the CNG may be cooled by the drain tank 35. This, in turn, may cool the oil stored in the drain tank 35. Further, the flow velocity of CNG is high in the drain tank 35. This may result in the convection of the oil in the drain tank 35. In this case, the thermistor temperature Ta decreases either when the thermistor 41 is immersed in oil or when the thermistor 41 is not immersed in oil. Thus, the determination accuracy of the determination process may decrease. The flow amount maximum value Omax is set to avoid such a situation.
When the flow amount cumulation value $\Sigma Qf$ is less than the flow amount minimum value Omin or greater than the flow amount maximum value Omax (step S207: NO), the controller 50 proceeds to step S213, which will be described below. When the flow amount cumulation value $\Sigma Qf$ is greater than or equal to the flow amount minimum value Omin and less than or equal to the flow amount maximum value Omax (step S207: YES), the controller 50 increments a time difference timer T1 by "1" (step S208). Then, the controller 50 determines whether or not the updated time difference timer T1 is greater than or equal to a period ending determination value T1Th (step S209).
In the present embodiment, CNG, the temperature of which is decreased when depressurized by the pressure reduction valve 33, flows into the drain tank 35. Thus, when the CNG flow amount Of is greater than or equal to the determination permission flow amount QfTh, the thermistor temperature Ta is apt to decrease. When shifting from a condition in which the CNG flow amount Of is greater than or equal to the determination permission flow amount QfTh to a condition in which the CNG flow amount Of is less than the determination permission flow amount QfTh, the thermistor temperature Ta is apt to increase. However, the thermistor temperature Ta may still decrease, although slowly, immediately after such condition shifting. Thus, the period ending determination value T1Th is set so that steps S205 and S206 may each be executed when there is a possibility of a decrease in the thermistor temperature Ta even though the CNG flow amount Of is less than the determination permission flow amount QfTh.

When the time difference timer T1 is less than the period ending determination value T1Th (step S209: NO), there is a possibility that the difference minimum value ΔTfmin may be updated. Thus, the controller 50 proceeds to step S205, which has been described above. When the time difference timer T1 is greater than or equal to the period ending determination value T1Th (step S209: YES), the controller 50 proceeds to step S210. In the present embodiment, the period from when the determination result of step S203 becomes "YES" to when the determination result of step S209 becomes "YES" corresponds to a "determination period."

In step S210, the controller 50 sets a specified minimum difference used for the determination process and then proceeds to step S211.

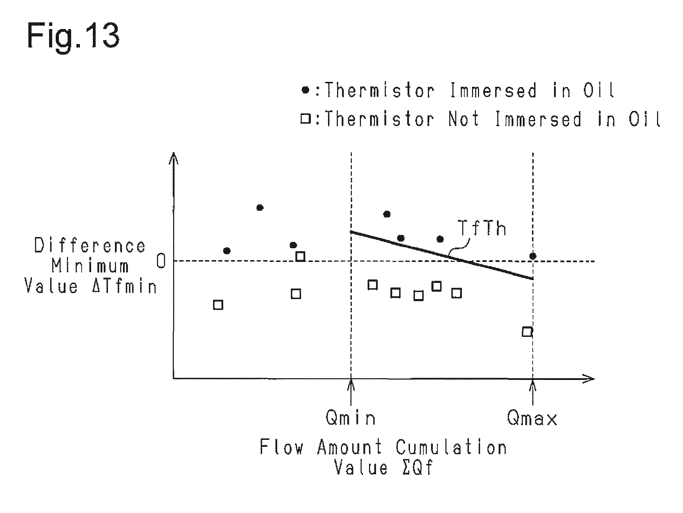

As shown in Fig. 13, the specified minimum difference TfTh is set to be smaller when the flow amount cumulation value ΣQf is small than when the flow amount cumulation value ΣQf is large. In the present embodiment, the specified minimum difference TfTh is proportional to the decrease in the flow amount cumulation value ΣQf. Preferably, the decreasing gradient of the specified minimum value TfTh is set so that the difference minimum value ΔTfmin does not become greater than or equal to the specified minimum difference TfTh when the thermistor 41 is not immersed in oil.

Returning to the flowchart of Fig. 8, in step S211, the controller 50 determines whether or not the difference minimum value ΔTfmin, which is the smallest one of the differences ΔTf calculated during the determination period, is greater than or equal to specified minimum difference TfTh set in step S210. When the difference minimum value ΔTfmin is less than the specified minimum difference TfTh (step S211: NO), it may be determined that there is a possibility that the thermistor 41 is not immersed in oil. Thus, the controller 50 resets the oil-immersed counter value CNT3 to "0 (zero)" (step S212) and proceeds to step S213.

In step S213, the controller 50 performs a reset process to reset the flow amount cumulation value ΣQf and the time difference timer T1 to "0 (zero)" and assign a large value (e.g., 200) to a difference minimum value ΔTfmin. Then, the controller 50 temporarily terminates the present routine.

When the difference minimum value ΔTfmin is greater than or equal to the specified minimum difference TfTh (step S211: YES), the controller 50 increments the oil-immersed counter value CNT3 by "1" (step S214). Thus, the controller 50 of the present embodiment also functions as a determination unit configured to determine whether or not the temperature sensor is immersed in oil when the difference minimum value ΔTfmin is greater than or equal to the specified minimum difference TfTh during a single determination period. Then, when the updated oil-immersed counter value CNT3 is less than the oil-immersed determination value CNT3Th (step S215: NO), the controller 50 proceeds to step S213, which has been described above. When the updated oil-immersed counter value CNT3 is greater than or equal to the oil-immersed determination value CNT3Th (step S215: YES), the controller 50 performs a warning process that activates the warning lamp 510 (step S216) and proceeds to step S213, which has been described above.

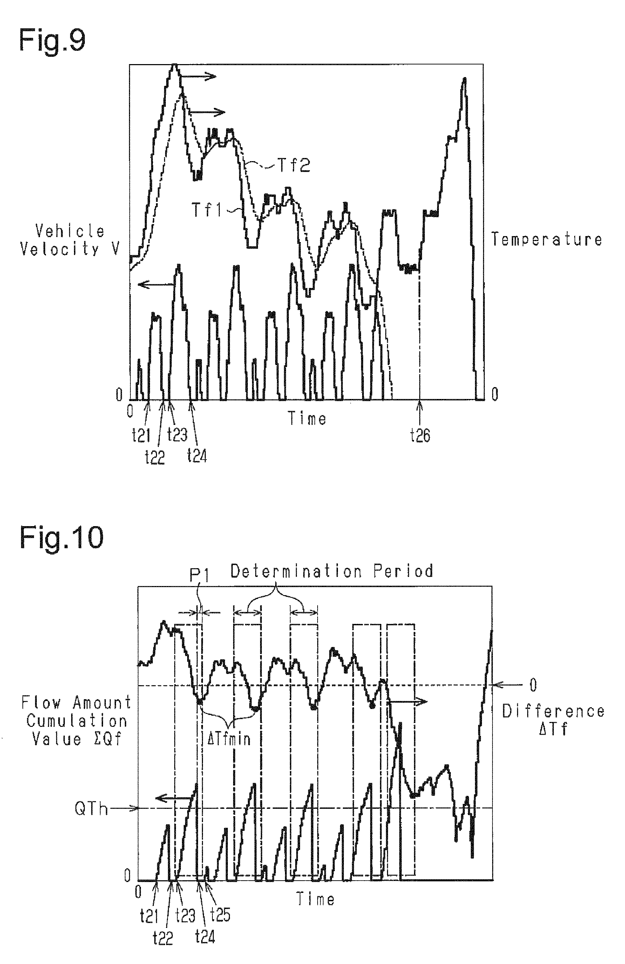

The operation when the thermistor 41 is not immersed in oil will now be described with reference to the timing charts shown in Figs. 9 and 10 and the graph shown in Fig. 13. It is assumed here that the CNG tank pressure Pc is greater than or equal to the determination tank pressure PCTh and that the thermistor temperature Ta is greater than or equal to the minimum temperature Tamin.

Referring to Figs. 9 and 10, when the vehicle is travelling at a vehicle velocity V resulting in the CNG flow amount Q being greater than or equal to the determination permission flow amount QfTh, the CNG flow amount Of obtained in predetermined cycles is cumulated. This gradually increases the flow amount cumulation value ΣQf. Then, when the vehicle stops, the CNG flow amount Of is less than the determination permission flow amount QfTh. Thus, the calculation of the flow amount cumulation value ΣQf is stopped. Here, when the vehicle starts to move and stops immediately afterward such as in the period from a first timing t21 to a second timing t22, the flow amount cumulation value ΣQf, which is the cumulation result of the CNG flow amount Of during this period, is less than the flow amount minimum value Omin.

Referring to Fig. 13, during such a period, the thermistor temperature Ta may not be low enough and the extracted difference minimum values ΔTfmin may differ greatly. Thus, even when the determination process is performed using the difference minimum value ΔTfmin, the determination accuracy of the determination process is low. Accordingly, in the present embodiment, the determination process is not performed during the period in which the flow amount cumulation value ΣQf is less than the flow amount minimum value Omin.

When the flow amount cumulation value ΣQf, which is the cumulation result of the CNG flow amount Of, is greater than or equal to the flow amount minimum value Omin and less than or equal to the flow amount maximum value Omax such as during the period a third timing t23 to a fourth timing t24, the updating of the difference minimum value ΔTfmin is continued. That is, from the fourth timing t24 to a fifth timing t25, which is when an update permission time P1 (e.g., three seconds) elapses, the updating of the difference minimum value ΔTfmin is continued. The update permission time P1 corresponds to the time that the time difference timer T1 needs to reach the period ending determination value T1Th from "0 (zero)."

After the fifth timing t25, it is determined whether or not the difference minimum value ΔTfmin for the determination period from the third timing t23 to the fifth timing t25 is greater than or equal to the specified minimum difference TfTh, which is set in accordance with the flow amount cumulation value ΣQf for this period. In this case, the difference minimum value ΔTfmin is less than the specified minimum difference TfTh. Thus, it is determined that the thermistor 41 may not be immersed in oil. Thus, the warning lamp 510 is not activated.

From a sixth timing t26, the vehicle accelerates. Thus, the CNG flow amount Of continues to increase. However, in this case, the CNG flow amount Of continues to increase even when the flow amount cumulation value ΣQf exceeds the flow amount maximum value. Thus, the determination process is not performed.

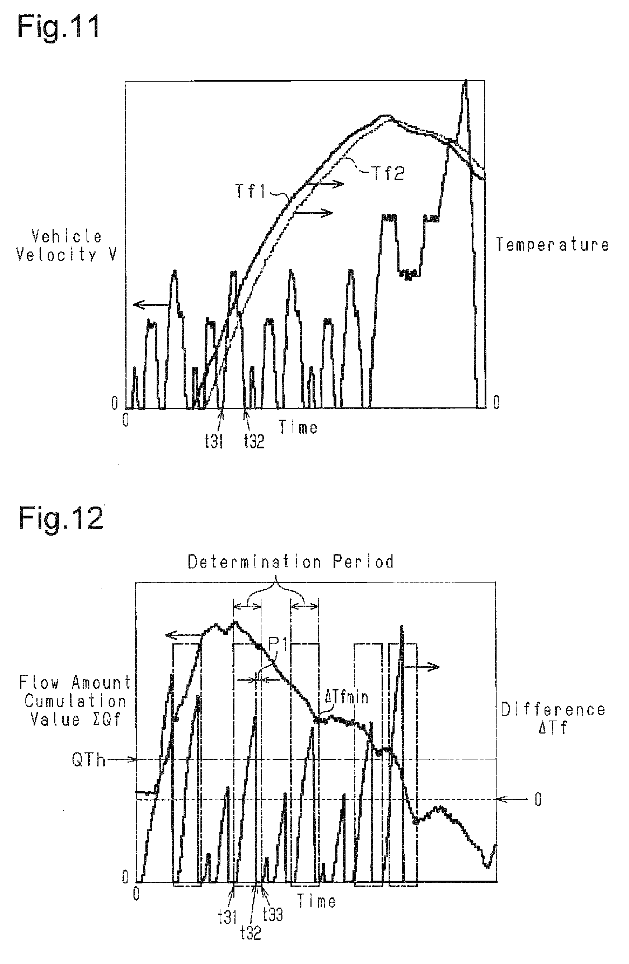

The operation when the thermistor 41 is immersed in oil will now be described with reference to the timing charts of Figs. 11 and 12. It is assumed here that the CNG tank pressure Pc is greater than or equal to the determination tank pressure PCTh and that the thermistor temperature Ta is greater than or equal to the minimum temperature Tamin.

As shown in Figs. 11 and 12, the updating of the difference minimum value ΔTfmin is continued when the flow amount cumulation value ΣQf, which is the cumulation result of the CNG flow amount Qf, is greater than or equal to the flow amount minimum value Qmin and less than or equal to the flow amount maximum value Qmax such as during the period from a first timing t31 to a second timing t32. That is, the updating of the difference minimum value ΔTfmin is continued from the second timing t32 to a third timing t33, which is when the update permission time P1 elapses. The update permission time P1 corresponds to the time that the time difference timer T1 needs to reach the period ending determination value T1Th from "0 (zero)."

After the third timing t33, it is determined whether or not the difference minimum value ΔTfmin in the determination period from the first timing t31 to the third timing t33 is greater than or equal to the specified minimum difference TfTh, which is set in accordance with the flow amount cumulation value ΣQf for this determination period. In this case, the difference minimum value ΔTfmin is greater than or equal to the specified minimum difference TfTh. Thus, it is determined that the thermistor 41 may be immersed in oil, and the oil-immersed counter value CNT3 is updated. When the oil-immersed counter value CNT3 becomes greater than or equal to the coil-immersed determination value CNT3Th, the warning lamp 510 is activated.

In addition to advantages (1), (2), and (5) to (7) of the first embodiment, the present embodiment has the advantages described below.

(8) For example, under a situation in which the thermistor 41 is not immersed in oil, when an increase in the CNG flow amount Qf decreases the thermistor temperature Ta, the second smoothing temperature Tf2 is apt to becoming greater than the first smoothing temperature Tf1. That is, when the thermistor 41 is not immersed in oil, the probability is high of the difference minimum value ΔTfmin (=Tf1-Tf2) becoming smaller than "0 (zero)." Thus, the difference minimum value ΔTfmin is obtained for each determination period. When the difference minimum value ΔTfmin is greater than or equal to the specified minimum difference TfTh, it is determined that the thermistor 41 is immersed in oil. This improves the accuracy for determining whether or not the thermistor 41 is immersed in oil.

(9) When the flow amount cumulation value ΣQf is less than the flow amount minimum value Qmin, the period may be short during which the CNG flow amount Qf is greater than or equal to the determination permission flow amount QfTh, and the CNG flow amount Qf may increase at a gradual gradient during this period. Thus, the difference is small between the first smoothing temperature Tf1 and the second smoothing temperature Tf2. As a result, even in a situation in which the thermistor 41 is not immersed in oil, the difference minimum value ΔTfmin does not become that small. Further, when performing a determination process using the difference minimum value ΔTfmin, there is a high possibility that the thermistor 41 may be erroneously determined as being immersed in oil. In the present embodiment, during the period in which the flow amount cumulation value ΣQf is less than the flow amount minimum value Qmin, a determination process that uses the difference minimum value ΔTfmin of this period is not performed. Thus, when the thermistor 41 is not immersed in oil, the possibility is decreased of the thermistor 41 erroneously determined as being immersed in oil.

(10) When the flow amount cumulation value ΣQf exceeds the flow amount maximum value Omax, the period may be long during which the CNG flow amount Qf is greater than or equal to the determination permission flow amount QfTh, and the CNG flow amount Qf during this period may be increased at a steep gradient. Thus, the CNG that flows into the drain tank 35 may cool the drain tank 35 and the oil stored in the drain tank 35, and the flow of the CNG above the liquid level of the oil may result in convection of the oil. In this case, even when the thermistor 41 is immersed in oil, the thermistor temperature Ta may become low and the difference minimum value ΔTfmin may become low. In this case, under a situation in which the thermistor 41 is immersed in oil, when the determination process is performed using the difference minimum value ΔTfmin, the thermistor 41 may be erroneously determined as not being immersed in oil. In the present embodiment, when the flow amount cumulation value ΣQf exceeds the flow amount maximum value Omax, the determination process that uses the difference minimum value ΔTfmin is not performed. Accordingly, when the thermistor 41 is immersed in oil, the possibility is decreased of the thermistor 41 erroneously determined as not being immersed in oil.

(11) Under a situation in which the thermistor 41 is not immersed in oil, as the flow amount cumulation value ΣQf increases, the difference ΔTf becomes smaller more easily. Thus, the specified minimum difference TfTh is set as a smaller value when the flow amount cumulation value ΣQf is larger. As a result, when the thermistor 41 is not immersed in oil, the difference minimum value ΔTfmin does not easily become greater than or equal to the specified minimum difference TfTh. This improves the accuracy for determining whether or not the thermistor 41 is immersed in oil.

Third Embodiment

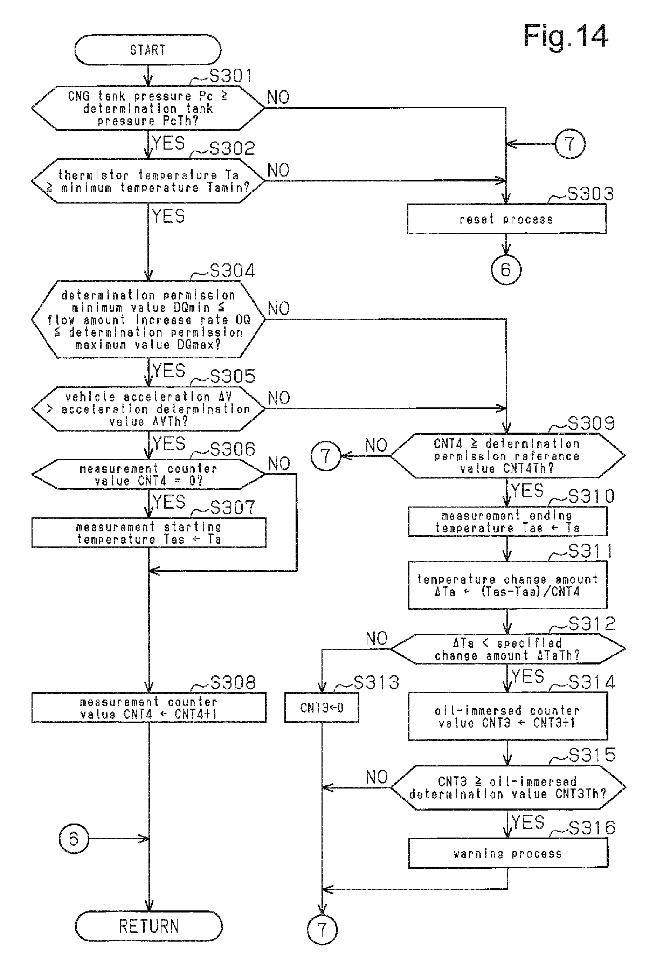

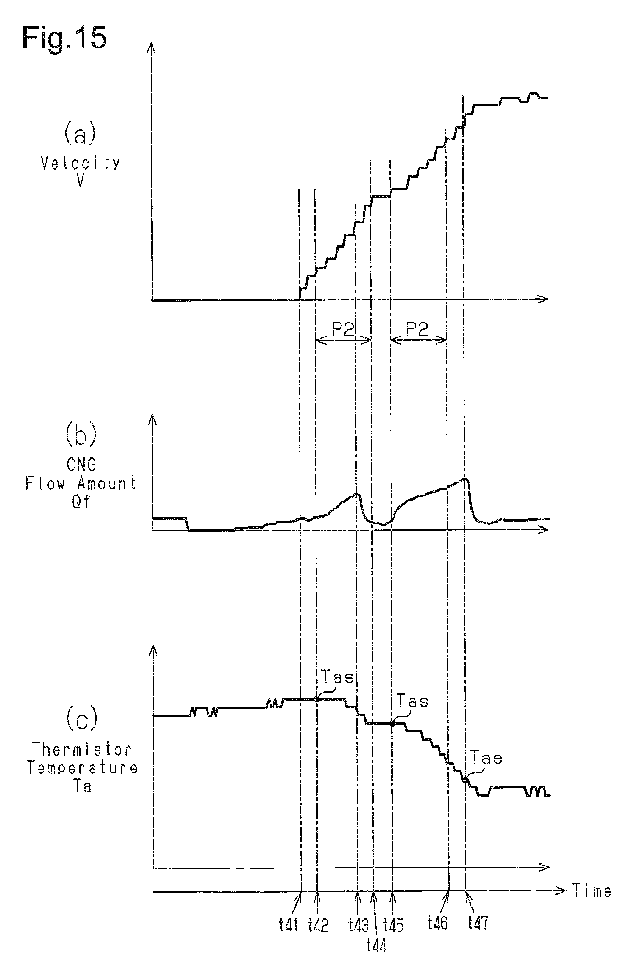

A third embodiment will now be described with reference to Figs. 14 and 15. The third embodiment differs from the first and second embodiments in the contents of the routine executed by the controller 50. Accordingly, the description hereafter will focus on the differences from the first and second embodiments. Same reference numerals are given to those components that are the same as the corresponding components of the first and second embodiments. Such components will not be described.

The routine executed by the controller 50 will now be described with reference to the flowchart of Fig. 14.

The routine shown in Fig. 14 is executed in preset and predetermined cycles. In the routine, when the CNG tank pressure Pc is less than the determination tank pressure PcTh (step S301: NO), the controller 50 proceeds to step S303, which will be described below. When the CNG tank pressure Pc is greater than or equal to the determination tank pressure PcTh (step S301: YES), the controller 50 proceeds to step S302. In step S302, when the thermistor temperature Ta is less than the minimum temperature Tamin (step S302: NO), the controller 50 proceeds to step S303. When the thermistor temperature Ta is greater than or equal to the minimum temperature Tamin (step S302: YES), the controller 50 proceeds to step S304.

In step S303, the controller 50 performs a reset process and resets a measurement counter value CNT4 to "0 (zero)," which will be described below. Then, the controller 50 temporarily ends the routine.

In step S304, the controller 50 acquires a flow amount increase rate DO, which is the increase rate of the CNG flow amount Of per unit time, and determines whether or not the flow amount increase rate DQ is greater than or equal to a determination permission minimum value DOmin and less than or equal to a determination permission maximum value DQmax.

Under a situation in which the CNG flow amount Qf is constant or increases very slowly, the thermistor temperature Ta does not change much even when the thermistor 41 is not immersed in oil. In other words, the thermistor temperature Ta may change in a manner that is almost the same as when the thermistor 41 is immersed in oil. When the CNG flow amount Of suddenly increases, the gas in the drain tank 35 is rapidly cooled, and the oil in the drain tank 35 may also be cooled. In this case, the thermistor temperature Ta decreases even when the thermistor 41 is immersed in oil. This may lower the determination accuracy of the determination process. Thus, in the present embodiment, the determination permission minimum value DOmin and the determination permission maximum value DQmax are each set to allow for detection of proper increases in the CNG flow amount Qf.

When the flow amount increase rate DQ is less than the determination permission minimum value DOmin or the flow amount increase rate DQ is greater than the determination permission maximum value DQmax (step S304: NO), the controller 50 proceeds to step S309, which will be described below. When the flow amount increase rate DQ is greater than or equal to the determination permission minimum value DOmin and the flow amount increase rate DQ is less than or equal to the determination permission maximum value DQmax (step S304: YES), the controller 50 determines whether or not the vehicle acceleration ΔV, which is the amount of change of the vehicle velocity per unit time, is greater than an acceleration determination value ΔVTh (step S305). The acceleration determination value ΔVTh is a reference value for determining whether or not the vehicle is accelerating. That is, in step S305, it is determined whether or not the rotation speed of the crankshaft of the internal combustion engine is increasing.

When the vehicle acceleration ΔV is less than or equal to the acceleration determination value ΔVTh (step S305: NO), it may be determined that the vehicle is not accelerating or that the acceleration of the vehicle has ended. Thus, the controller 50 proceeds to step S309, which will be described below. When the vehicle acceleration ΔV is greater than the acceleration determination value ΔVTh (step S305: YES), it may be determined that the vehicle is accelerating. Thus, the controller 50 determines whether or not the measurement counter value CNT4 is "0 (zero)" in step S306.

When the measurement counter value CNT4 is "0 (zero)" (step S306: YES), it may be determined that the flow amount increase rate DQ is greater than or equal to the determination permission minimum value DOmin due to the acceleration of the vehicle. Thus, the controller 50 sets the present thermistor temperature Ta as a measurement starting temperature Tas (step S307). Then, the controller 50 proceeds to step S308. When the measurement counter value CNT4 is not "0 (zero)" (step S306: NO), the measurement starting temperature Tas has been set. Thus, the controller 50 proceeds to step S308.

In step S308, the controller 50 increments the measurement counter value CNT4 by "1." Then, the controller 50 temporarily terminates the present routine.

In step S309, the controller 50 determines whether or not the present measurement counter value CNT4 is greater than or equal to a determination permission reference value CNT4Th. The determination permission reference value CNT4Th is a value corresponding to a measurement permission period P2, which will be described below. When the measurement counter value CNT4 is less than the determination permission reference value CNT4Th (step S309: NO), the controller 50 proceeds to step S303, which has been described above. When the present measurement counter value CNT4 is greater than or equal to the determination permission reference value CNT4Th (step S309: YES), the controller 50 sets a measurement ending temperature Tae to the present thermistor temperature Ta (step S310). Then, the controller 50 uses relational equation (3) to calculate a temperature change amount $\Delta$Ta (step S311).

**[0096]** $\Delta Ta \leftarrow (Tas-Tae)/CNT4$    equation (3)

Then, the controller 50 determines whether or not the calculated temperature change amount $\Delta$Ta is less than a specified change amount $\Delta$TaTh (step S312).

Under a situation in which the flow amount increase rate DQ is greater than or equal to the determination permission minimum value DOmin and less than or equal to the determination permission maximum value DQmax, the thermistor temperature Ta does not change much when the thermistor Ta is immersed in oil. When the thermistor 41 is immersed in oil, the thermistor temperature Ta is apt to decreasing. The decreasing rate of the thermistor temperature Ta increases as the CNG flow amount Qf increases. Thus, the specified change amount $\Delta$TaTh is set as a reference for determining whether or not the thermistor temperature Ta is changing due to an increase in the flow amount of the CNG entering the drain tank 35. Thus, the controller 50 of the present embodiment also functions as a determination unit configured to determine that the thermistor 41 is immersed in oil when the temperature change amount $\Delta$Ta, which is the change amount of the thermistor temperature Ta per unit time under a situation in which the CNG flow amount Qf has a tendency of increasing, is less than the specified change amount $\Delta$TaTh.

When the calculated temperature change amount$\Delta$Ta is greater than or equal to the specified change amount $\Delta$TaTh (step S312: NO), it is determined that the thermistor 41 may not be immersed in oil. Thus, the controller 50 resets the oil-immersed counter value CNT3 to "0 (zero)" (step S313) and then proceeds to step S303, which has been described above. When the temperature change amount $\Delta$Ta is less than the specified change amount $\Delta$TaTh (step S312: YES), it is determined that the thermistor 41 may be immersed in oil. Thus, the controller 50 increments the oil-immersed counter value CNT3 by "1" (step S314).

When the updated oil-immersed counter value CNT3 is less than the oil-immersed determination value CNT3Th (step S315: NO), the controller 50 proceeds to step S303, which has been described above. When the updated oil-immersed counter value CNT3 is greater than or equal to the oil-immersed determination value CNT3Th (step S315: YES), the controller 50 performs a warning process that activates the warning lamp 510 (step S316) and proceeds to step S303.

The operation when determining whether or not the thermistor 41 is immersed in oil will now be described with reference to the timing chart shown in Fig. 15. It is assumed here that the CNG tank pressure Pc is greater than or equal to the determination tank pressure PcTh, the thermistor temperature Ta is greater than or equal to the minimum temperature Tamin, and that the thermistor 41 is not immersed in oil.

As shown in (a), (b) and (c) of Fig. 15, when the vehicle is stopped, the amount of CNG injected from the injector 14 is small. Thus, the CNG flow amount Qf increases little. As a result, the determination process is not performed when the vehicle is stopped.

When the vehicle starts to move and accelerate like from a first timing t41, the CNG flow amount Qf starts to increase. As a result, the flow amount increase rate DQ reaches the determination permission minimum value DQmin at a second timing t42, and the thermistor temperature Ta at the second timing t42 is used as the measurement starting temperature Tas. However, the flow amount increase rate DQ becomes less than the determination permission minimum value DQmin at a third timing t43 that is before a fourth timing t44, which is when the measurement permission period P2 (e.g., three seconds) from the second timing t42 elapses. Thus, the determination process is not performed at this timing.

Subsequently, when the flow amount increase rate DQ starts to increase again and the flow amount increase rate DQ reaches the determination permission minimum value DQmin at a fifth timing t45, the thermistor temperature Ta at the fifth timing t45 is used as the measurement starting temperature Tas. Here, the flow amount increase rate DQ is greater than or equal to the determination permission minimum value DQmin even at a sixth timing t46, which is when the measurement permission period P2 from the fifth timing t45 elapses.

When the flow amount increase rate DQ becomes less than the determination permission minimum value DQmin at a seventh timing t47, the thermistor temperature Ta at the seventh timing t47 is used as the measurement ending temperature Tae. The measurement starting temperature Tas acquired at the fifth timing, the measurement ending temperature Tae acquired at the seventh timing t47, and the measurement counter value CNT4 updated during the period from the fifth timing t45 to the seventh timing t47 are assigned to the relational equation (3) to calculate the temperature change amount ΔTa. In this case, the temperature change amount ΔTa is greater than or equal to the specified change amount ΔTaTh Thus, the oil-immersed counter value CNT3 is set to "0 (zero)" and the warning lamp 510 is not activated.

In addition to advantages (1) and (5) to (7) of the first and second embodiments, the present embodiment has the advantages described below.

(12) In the present embodiment, under a situation in which the flow velocity of the CNG entering the drain tank 35 is apt to increasing, the temperature change amount ΔTa, which is the change amount of the thermistor temperature Ta per unit time, is calculated. When the temperature change amount ΔTa is greater than or equal to the specified change amount ΔTaTh, it is determined that the thermistor 41 may not be immersed in oil. This allows for highly accurate determination of whether or not the thermistor 41 is immersed in oil.

(13) When the tendency for the flow velocity of the CNG to increase is too short, the temperature change amount ΔTa may not be that large during this period even when the thermistor 41 is not immersed in oil. This may lower the determination accuracy of the determination process. In the present embodiment, when the tendency for the flow velocity of the CNG to increase continues for over the measurement permission period P2 or longer, the temperature change amount ΔTa of the measurement permission period P2 is calculated when performing the determination process. This allows for improvement of the accuracy for determining whether or not the thermistor 41 is immersed in oil.

(14) In the present embodiment, when the vehicle is not accelerating, particularly, when the vehicle is decelerating, the CNG flow amount Qf in the drain tank 35 decreases. This warms the drain tank 35. Thus, even when the amount of CNG flowing into the drain tank 35 temporarily increases, the thermistor temperature Ta, which is detected by the thermistor 41 that is not immersed in oil, does not easily become low. Thus, in the present embodiment, the temperature change amount ΔTa is calculated using the thermistor temperature Ta acquired during acceleration of the vehicle, and the temperature change amount ΔTa is used to perform the determination process. Thus, when the thermistor 41 is not immersed in oil, the possibility is decreased of the thermistor 41 being erroneously determined as being immersed in oil.

(15) When the increase rate of the CNG flow amount Of is too high, the CNG flowing into the drain tank 35 cools the drain tank 35. This may also cool the oil stored in the drain tank 35. In such a case, even if the thermistor 41 is immersed in oil, the thermistor temperature Ta decreases. Thus, even under a situation in which the thermistor 41 is immersed in oil, it may be erroneously determined that the thermistor 41 is not immersed in oil. In the present embodiment, the determination process is not performed when the flow amount increase rate DO is greater than or equal to the determination permission maximum value DQmax. Thus, when the thermistor 41 is immersed in oil, the possibility is decreased of the thermistor 41 being erroneously determined as not being immersed in oil.

Fourth Embodiment

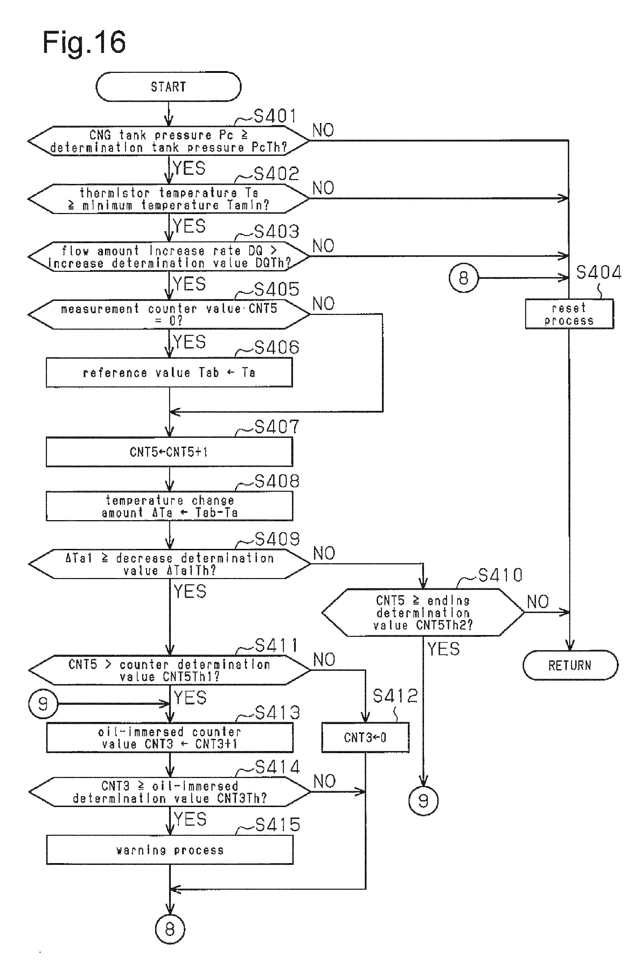

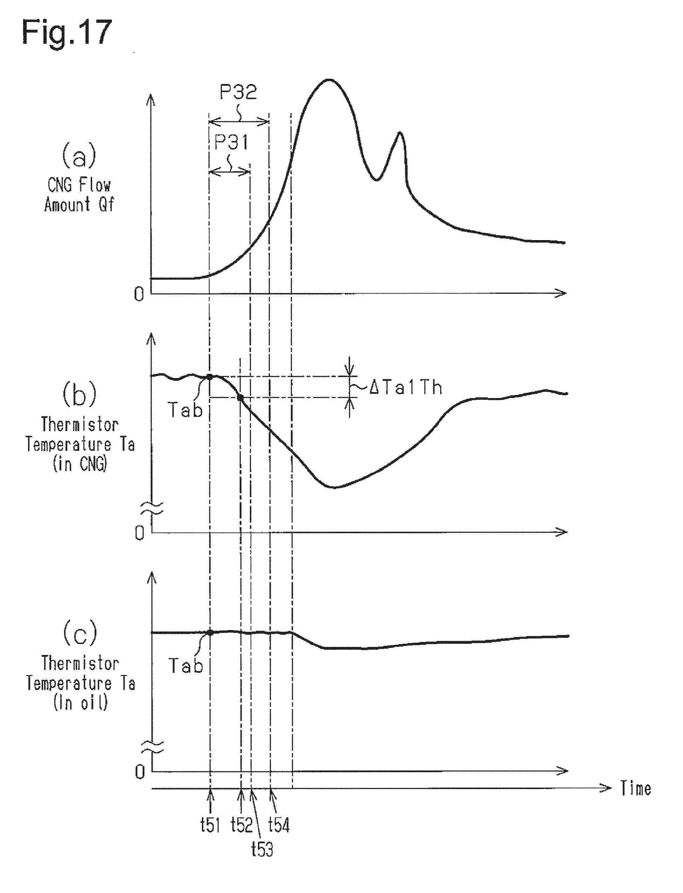

A fourth embodiment will now be described with reference to Figs. 16 and 17. The fourth embodiment differs from the first to third embodiments in the contents of the routine executed by the controller 50. Accordingly, the description hereafter will focus on the differences from the first to third embodiments. Same reference numerals are given to those components that are the same as the corresponding components of the first to third embodiments. Such components will not be described.

The routine executed by the controller 50 will now be described with reference to the flowchart of Fig. 16.

The routine shown in Fig. 16 is executed in preset and predetermined cycles. In the routine, when the CNG tank pressure Pc is less than the determination tank pressure PcTh (step S401: NO), the controller 50 proceeds to step S404, which will be described below. When the CNG tank pressure Pc is greater than or equal to the determination tank pressure PcTh (step S401: YES), the controller 50 proceeds to step S402. In step S402, when the thermistor temperature Ta is less than the minimum temperature Tamin (step S402: NO), the controller 50 proceeds to step S404. When the thermistor temperature Ta is greater than or equal to the minimum temperature Tamin (step S402: YES), the controller 50 proceeds to step S403.

In step S403, the controller 50 acquires the flow amount increase rate DO, which is the increase rate of the CNG flow amount Of per unit time, and determines whether or not the flow amount increase rate DO is greater than an increase determination value DQTh.

Under a situation in which the thermistor 41 is not immersed in oil, when the flow amount of the CNG entering the drain tank 35 increases, the thermistor temperature Ta decreases in accordance with the increase in the flow amount. Under a situation in which the thermistor 41 is immersed in oil, even when the flow amount of the CNG entering the drain tank 35 increases, the thermistor temperature Ta changes little. Even if the thermistor temperature Ta changes, the change would be delayed from the timing at which the flow amount of CNG increases. Thus, an increase determination value DQTh is set as a reference for determining whether or not the flow amount of the CNG entering the drain tank 35 has started to increase.

When the flow amount increase rate DO is greater than the increase determination value DQTh (step S403: YES), it may be determined that the flow amount of the CNG entering the drain tank 35 is increasing. Thus, the processing proceeds to step S405. When the flow amount increase rate DO is less than or equal to the increase determination value DQTh (step S403: NO), it may be determined that the flow amount of the CNG entering the drain tank 35 is not increasing. Thus, the processing proceeds to step S404.

In step S404, the controller 50 performs a reset process and resets a measurement starting counter value CNT5 to "0 (zero)," which will be described below. Then, the controller 50 temporarily ends the routine.

In step S405, the controller 50 determines whether or not the measurement starting counter value CNT5 is "0 (zero)." When the measurement starting counter value CNT5 is "0 (zero)" (step S405: YES), the controller 50 sets a reference value Tab to the present thermistor temperature Ta (step S406) and proceeds to step S407. When the measurement starting counter value CNT5 is greater than "0 (zero)" (step S405: NO), the controller 50 proceeds to step S407.

In step S407, the controller 50 increments the measurement starting counter value CNT5 by "1." Then, the controller 50 subtracts the present thermistor temperature Ta from the set reference value Tab to obtain a temperature change amount $\Delta Ta1$ (step S408) and determines whether or not the temperature change amount $\Delta Ta1$ is greater than or equal to a preset decrease determination value $\Delta Ta1Th$ (step S409). The decrease determination value $\Delta Ta1Th$ is set as a reference for determining whether or not the thermistor temperature Ta has decreased under a situation in which the flow amount of the CNG to the drain tank 35 is increasing.

When the temperature change amount $\Delta Ta1$ is less than the decrease determination value $\Delta Ta1Th$ (step S409: NO), the controller 50 determines whether or not the measurement starting counter value CNT5 updated in step S407 is greater than or equal to a preset ending determination value CNT5Th2 (step S410).

When a decrease in the thermistor temperature Ta cannot be detected even after a certain time elapses from when an increase in the flow amount of the CNG entering the drain tank 35 is detected, there is a high probability that the thermistor 41 is immersed in oil. Thus, the ending determination value CNT5Th2 is set as a reference for determining the timing for ending a determination process.

When the measurement starting counter value CNT5 is less than the ending determination value CNT5Th2 (step S410: NO), the controller 50 temporarily terminates the present routine. When the measurement starting counter value CNT5 is greater than or equal to the ending determination value CNT5Th2 (step S410: YES), the controller 50 proceeds to step S413, which will be described below.

When the temperature change amount $\Delta Ta1$ is greater than or equal to the decrease determination value $\Delta Ta1Th$ (step S409: YES), the controller 50 determines whether or not the measurement starting counter value CNT5 updated in step S407 is greater than a preset count determination value CNT5Th1 (step S411). The count determination value CNT5Th1 is set to a value smaller than the ending determination value CNT5Th2.

When the thermistor 41 is immersed in oil, even if the flow amount of the CNG entering the drain tank 35 enters the drain tank 35, the thermistor temperature Ta changes little. Even if the thermistor temperature Ta changes, the change in the thermistor temperature Ta would be delayed compared to when the thermistor 41 is not immersed in oil. In contrast, when the thermistor temperature Ta is not immersed in oil, an increase in the flow amount of the CNG that enters the drain tank 35 will readily start decreasing the thermistor temperature Ta. Thus, the count determination value CNT5Th1 is set as a reference for determining whether or not the thermistor 41 is immersed in oil using the elapsed time from when the flow amount of the CNG starts to increase. In the present embodiment, the measurement starting counter value CNT5 corresponds to an elapsed time from when the flow velocity of the CNG entering the drain tank 35 starts to increase to when a decrease in the thermistor temperature Ta is detected. Further, the count determination value CNT5Th1 corresponds to a determination time.

When the measurement starting counter value CNT5 is less than or equal to the count determination value CNT5Th1 (step S411: NO), it is determined that the thermistor 41 may not be immersed in oil, and the controller 50 resets the oil-immersed counter value CNT3 to "0 (zero)" (step S412). Then, the controller 50 proceeds to step S404, which has been described above. When the measurement starting counter value CNT5 is greater than the count determination value CNT5Th1 (step S411: YES), it is determined that the thermistor 41 may be immersed in oil, and the controller 50 increments the oil-immersed counter value CNT3 by "1" (step S413). Thus, the controller 50 of the present embodiment functions as a determination unit that determines whether or not the thermistor 41 is immersed in oil from the timing at which the CNG flow amount Qf starts to increase and the timing at which the thermistor temperature Ta changes.

Then, when the updated oil immersed-counter value CNT3 is greater than or equal to the oil-immersed determination value CNT3Th (step S414: YES), the controller 50 performs a warning process that activates the warning lamp 510 (step S415) and proceeds to step S404, which has been described above. When the oil immersed-counter value CNT3 is less than the oil-immersed determination value CNT3Th (step S414: NO), the controller 50 proceeds to step S404, which has been described above, without performing the warning process.

The operation when determining whether or not the thermistor 41 is immersed in oil will now be described with reference to the timing chart of Fig. 17. It is assumed here that the CNG tank pressure Pc is greater than or equal to the determination tank pressure PcTh and that the thermistor temperature Ta is greater than or equal to the minimum temperature Tamin.

Referring to (a) and (b) of Fig. 17, under a situation in which the thermistor 41 is not immersed in oil, when the vehicle starts to accelerate and the CNG flow amount Qf starts to increase at the first timing t51, the thermistor temperature Ta immediately starts to decrease in response to the flow amount increase. At the second timing t52 that is before the third timing t53, which is when a determination time P31 elapses from the first timing t51, the temperature change amount $\Delta$Ta1 (=Tab-Ta) becomes greater than or equal to the decrease determination value $\Delta$Ta1Th. Thus, at the second timing t52, it is determined that the thermistor 41 may not be immersed in oil. The determination time P31 is a value obtained by multiplying the count determination value CNT5Th1 by the time corresponding to a predetermined cycle.

Referring to (a) and (c) of Fig. 17, under a situation in which the thermistor 41 is immersed in oil, even when the CNG flow amount Qf starts to increase at a first timing t51, it takes time for the thermistor temperature Ta to decrease. That is, even at a fourth timing t54, which is when a determination ending time P32 elapses from the first timing t51, the thermistor temperature Ta is substantially the same value as the reference value Tab, which is the thermistor temperature Ta at the first timing t51. Thus, at the fourth timing t54, it is determined that the thermistor 41 may be immersed in oil, and the oil-immersed counter value CNT3 is incremented by "1". When the oil-immersed counter value CNT3 becomes greater than or equal to the oil-immersed determination value CNT3Th, the warning lamp 510 is activated. The determination ending time P32 is a value obtained by multiplying the ending determination value CNT5Th2 by the time corresponding to a predetermined cycle.

In addition to advantages (1) and (5) to (7) of the first to third embodiments, the present embodiment has the following advantage.

(16) When the thermistor 41 is not immersed in oil, as the flow amount of the CNG entering the drain tank 35 increases, the thermistor temperature Ta starts to decrease in response to the flow amount increase more immediately than when the thermistor 41 is immersed in oil. Thus, in the present embodiment, it is determined whether or not the thermistor 41 is immersed in oil from the timing at which the flow amount of the CNG entering the drain tank 35 starts to increase and the timing at which the thermistor temperature Ta starts to change. Thus, it can be accurately determined whether or not the thermistor 41 is immersed in oil.

Each of the above embodiments may be modified as described below.

In the first embodiment, the specified cumulation value TTh may be a constant value regardless of the flow amount cumulation value $\Sigma$Qf. However, it is preferred that the specified cumulation value TTh be set so that when the thermistor 41 is not immersed in oil, the temperature cumulation value $\Sigma$T does not become less than or equal to the specified cumulation value TTh.

In the first embodiment, the offset value Tof may be "0 (zero)" as long as the coefficients "K1" and "K2" are properly set. In this case, in step S105, it is determined whether or not the first smoothing temperature Tf1 is lower than the second smoothing temperature Tf2. In step S106, the temperature cumulation value $\Sigma$T is obtained by cumulating the difference obtained by subtracting the first smoothing temperature Tf1 from the second smoothing temperature Tf2.

In the first embodiment, when the flow amount cumulation value $\Sigma$Qf is greater than or equal to the specified flow amount cumulation value QTh (step S110: YES), the processes from step S113 may be performed regardless of the cumulation counter value CNT1. That is, the determination process of step S112 may be omitted.

In the first embodiment, the processes from step S112 may be performed regardless of the flow amount cumulation value $\Sigma$Qf. That is, the determination process of step S110 may be omitted.

In the second embodiment, the specified minimum difference TfTh may be a constant value regardless of the flow amount cumulation value $\Sigma$Qf. However, it is preferred that the specified minimum difference TfTh be set so that when the thermistor 41 is not immersed in oil, the difference minimum value $\Delta$Tfmin does not become greater than or equal to the specified minimum difference TfTh.

In the second embodiment, the processes of steps S208 and S209 may be omitted.

In this case, the determination period is from when the CNG flow amount Qf becomes greater than or equal to the determination permission flow amount QfTh to when the CNG flow amount Qf becomes less than the determination permission flow amount QfTh.

In the second embodiment, it may be determined whether or not the flow amount cumulation value $\Sigma$Qf is greater than or equal to the flow amount minimum value Qmin in step S207. That is, even when the flow amount cumulation value $\Sigma$Qf is greater than or equal to the flow amount maximum value Qmax, the processes from step S208 may be performed.

In the second embodiment, in step S207, it may be determined whether or not the flow amount cumulation value $\Sigma$Qf is less than or equal to the flow amount maximum value Qmax. That is, even when the flow amount cumulation value $\Sigma$Qf is less than or equal to the flow amount minimum value Qmax, the processes from step S208 may be performed.

In the second embodiment, the determination process of step S207 may be omitted. More specifically, when shifting from a condition in which the CNG flow amount Qf is greater than or equal to the determination permission flow amount QfTh to a condition in which the CNG flow amount Qf is less than the determination permission flow amount QfTh, the processes from step S208 may be performed regardless of the flow amount cumulation value $\Sigma$Qf.

In the third embodiment, when the rotation speed of the crankshaft of the internal combustion engine 11 increases, the CNG flow amount Qf increases even when the vehicle is not accelerating. Thus, in step S305, it may be determined whether or not the rotation speed of the crankshaft is increasing using the rotation speed obtained from the detection signal of the crank position sensor 503.

In the third embodiment, even if the flow amount increase rate DQ is greater than or equal to the determination permission minimum value DQmin and less than or equal to the determination permission maximum value DQmax, when the measurement counter value CNT4 becomes the determination permission reference value CNT4Th, the present thermistor temperature Ta may be set as the measurement ending temperature Tae. In this case, the measurement ending temperature Tae is used to calculate the temperature change amount $\Delta$Ta.

In the third embodiment, it may be determined whether or not the flow amount increase rate DQ is greater than or equal to the determination permission minimum value DQmin in step S304. That is, when the flow amount increase rate DQ is greater than or equal to the determination permission maximum value DQmax, the processes from step S305 may be performed.

In the third embodiment, it may be determined whether or not the flow amount increase rate DQ is less than or equal to the determination permission minimum value DQmin in step S304. That is, when the flow amount increase rate DQ is less than or equal to the determination permission minimum value DQmin, the processes from step S305 may be performed.

In the third embodiment, the measurement starting temperature Tas may be set to the minimum value of the thermistor temperature Ta during a period in which the flow amount increase rate DQ is greater than or equal to the determination permission minimum value DQmin and less than or equal to the determination permission maximum value DQmax, and the measurement ending temperature Tae may be set to the maximum value of the thermistor temperature Ta during the period.

In the first to fourth embodiments, the determination process may be performed even when the thermistor temperature Ta is less than the minimum temperature Tamin.

In the first to fourth embodiments, the determination process may be performed even when the CNG tank pressure Pc is less than the determination tank pressure PcTh.

In the first to fourth embodiments, the determination process may be performed an N number of times (where N is an integer that is 3 or greater). When determined that the thermistor 41 may be immersed in oil an M number of times or greater (where M is an integer that is smaller than N and 2 or greater), the warning lamp 510 may be activated.

The internal combustion engine may be a bi-fuel internal combustion engine that may run on gas fuel and liquid fuel. In this case, it is preferred that the determination process be performed when running on the gas fuel.

The gas fuel does not have to be CNG gas and may be any gas fuel that can be burned in the combustion chamber 16 of the internal combustion engine 11 such as hydrogen gas.

The temperature sensor does not have to be a thermistor and may be any temperature sensor with an output value that changes in accordance with changes in the flow velocity of the gas fuel when not immersed in oil.

**Claims**

1. An oil storage amount determination device that determines a storage amount of oil in a tank, wherein the tank is configured to receive gas fuel that is depressurized by a pressure reduction valve, the tank includes a separation unit that separates oil from the fuel gas, and the tank includes a side wall that supports a temperature sensor, the oil storage amount determination device comprising:

   a determination unit configured to determine whether or not the temperature sensor is immersed in the oil separated from the gas fuel by the separation unit, wherein the determination unit is configured to refer to how a flow velocity of the gas fuel changes and how a temperature detected by the temperature sensor changes to determine whether or not the temperature sensor is immersed in oil when the flow velocity of the gas fuel entering the tank changes.

2. The oil storage amount determination device according to claim 1, further comprising:

   a flow amount cumulation unit configured to obtain a flow amount cumulation value by cumulating a flow amount of the gas fuel in preset cycles when the flow amount of the gas fuel entering the tank is greater than or equal to a determination permission flow amount; and
a smoothing processor configured to obtain, in each of the cycles, a first smoothing temperature and a second smoothing temperature that change with different rates of delay from a change in the temperature detected by the temperature sensor;
wherein the determination unit is configured to refer to a difference of the first smoothing temperature and the second smoothing temperature obtained by the smoothing processor to determine whether or not the temperature sensor is immersed in oil when the flow amount cumulation value obtained by the flow amount cumulation unit is greater than or equal to a specified flow amount cumulation unit.

3. The oil storage amount determination device according to claim 2, wherein the second smoothing temperature is a value that changes with a longer delay than the first smoothing temperature from a change in the temperature detected by the temperature sensor, the oil storage amount determination device further comprises:

a temperature cumulation unit configured to subtract an offset value from the second smoothing temperature to obtain a corrected value, and cumulate a difference of the corrected value and the first smoothing temperature when the corrected value is smaller than the first smoothing temperature to obtain a temperature cumulation value;
wherein the determination unit is configured to refer to the temperature cumulation value obtained by the temperature cumulation unit to determine whether or not the temperature sensor is immersed in oil when the flow amount cumulation value obtained by the flow amount cumulation unit is greater than or equal to the specified flow amount cumulation value and, at the same time, a total time during which the temperature cumulation unit calculates the temperature cumulation value is longer than or equal to a determination permission time.

4. The oil storage amount determination device according to claim 3, wherein the determination unit is configured to determine that the temperature sensor is immersed in oil when the temperature cumulation value obtained by the temperature cumulation unit is less than or equal to a specified cumulation value.

5. The oil storage amount determination device according to claim 4, wherein the specified cumulation value is configured to be set to a larger value when the flow amount cumulation value obtained by the flow amount cumulation unit is large than when the flow amount cumulation value is small.

6. The oil storage amount determination device according to claim 2, wherein the second smoothing temperature is a value that changes with a longer delay than the first smoothing temperature from a change in the temperature detected by the temperature sensor, the oil storage amount determination device further comprises:

a difference calculation unit configured to calculate, in each of the cycles, a difference obtained by subtracting the second smoothing temperature from the first smoothing temperature during a determination period including a period during which the flow amount of the gas fuel is greater than or equal to the determination permission flow amount and, at the same time, the flow amount cumulation value obtained by the flow amount cumulation value is greater than or equal to the specified flow amount cumulation value;
wherein the determination unit is configured to determine that the temperature sensor is immersed in oil when the smallest one of the differences calculated by the difference calculation unit during the determination period is greater than or equal to a specified minimum difference.

7. The oil storage amount determination device according to claim 6, wherein the specified minimum difference is set to a smaller value when the flow amount cumulation value obtained by the flow amount cumulation unit is large than when the flow amount cumulation value is small.

8. The oil storage amount determination device according to claim 1, wherein the determination unit is configured to determine that the temperature sensor is immersed in oil when a change amount per unit time of the temperature detected by the temperature sensor is less than a specified change amount under a situation in which the flow velocity of the gas fuel entering the tank is apt to increasing.

9. The oil storage amount determination device according to claim 8, wherein the determination unit is configured to stop determining whether or not the temperature sensor is immersed in oil when one of the following conditions is unsatisfied:

an ambient temperature in the tank is greater than or equal to a minimum temperature;

an increase rate of the flow amount of the gas fuel is greater than or equal to a determination permission minimum value;

the increase rate of the flow amount of the gas fuel is less than or equal to a determination permission maximum value that is larger than the determination permission minimum value; and

a period during which the flow velocity of the gas fuel entering the tank is apt to increasing is longer than or equal to a minimum period value.

10. The oil storage determination device according to claim 8 or 9, wherein the determination unit is configured to stop determining whether or not the temperature sensor is immersed in oil when a rotation speed of an output shaft of an internal combustion engine is not increasing.

11. The oil storage determination unit according to claim 1, wherein the determination unit is configured to determine whether or not the temperature sensor is immersed in oil by referring to a timing at which the flow velocity of the gas fuel in the tank starts to increase and a timing at which the temperature detected by the temperature sensor changes.

12. The oil storage determination unit according to claim 11, wherein the determination unit is configured to determine that the temperature sensor is not immersed in oil if an elapsed time from when the flow velocity of the gas fuel entering the tank starts to increase to when a change in the temperature detected by the temperature sensor is recognized is shorter than or equal to a determination time.

# Fig.1

# Fig.2

Vertical Direction

Delivery Pipe
24

## Fig.3

## Fig.4

START

S101 — CNG tank pressure Pc ≧ determination tank pressure PcTh? — NO → ①

YES

S102 — thermistor temperature Ta ≧ minimum temperature Tamin? — NO

YES

S103 — CNG flow amount Qf ≧ determination permission flow amount QfTh? — NO

YES

S104 — flow amount cumulation value ΣQf ← ΣQf+Qf

S105 — 1st smoothing temperature Tf1 < (2nd smoothing temperature Tf2 - offset value Tof)? — NO

YES

S106 — temperature cumulation value ΣT ← ΣT+((TF2-Tof)-Tf1)

S107 — cumulation counter value CNT1 ← CNT1+1

②

# Fig.5

②

|S108

measurement counter value
CNT2 ← CNT2+1

|S109

NO / CNT2 ≧ measurement ending
counter value CNT2Th?

↓YES   |S110

ΣQf ≧ specified flow amount   NO
cumulation value QTh?

↓YES   |S112

CNT1 ≧ determination   NO
permission counter
value CNT1Th?

↓YES   ③

|S113

set specified value TTh   |S111

Reset
process

|S114

ΣT≦TTh?   NO   ①

↓YES   |S115   |S118

oil-immersed counter value   CNT3←0
CNT3 ← CNT3+1

|S116

CNT3 ≧ oil-immersed   NO
determination value CNT3Th?

↓YES   |S117

warning process

①

③

RETURN

Fig.6

□:Thermistor Not Immersed in Oil
●:Thermistor Immersed in Oil

Temperature Cumulation Value ΣT

TTh

0

QfTh

Flow Amount Cumulation Value ΣQf

Fig.7

Ta

Tf1

Tf2

Tof

(Tf2-Tof)

Temperature

t11  t12  t13  t14

Measurement Counter CNT2

23

# Fig.8

START

S201 CNG tank pressure Pc ≧ determination tank pressure PcTh? — NO → ④

YES

S202 thermistor temperature Ta ≧ minimum temperature Tamin? — NO → ⑤

YES

S203 CNG flow amount Qf ≧ determination permission flow amount QfTh? — NO →

YES

S204 flow amount cumulation value ΣQf ← ΣQf+Qf

S205 difference ΔTf = 1st smoothing temperature Tf1 − 2nd smoothing temperature Tf2

S206 difference minimum value ΔTfmin ← MIN(ΔTfmin, ΔTf)

④

S207 flow amount minimum value Qmin ≦ ΣQf ≦ flow amount maximum value Qmax? — NO → ⑤

YES

S208 time difference T1 ← T1+1

S209 T1 ≧ period ending determination value T1Th? — NO →

YES

S210 set specified minimum difference TfTh

S211 ΔTfmin≧TfTh? — NO →

S212 CNT3←0

YES

S214 oil immersed counter value CNT3 ← CNT3+1

S215 CNT3 ≧ oil-immersed determination value CNT3Th? — NO →

YES

S216 warning process

⑤ →

S213 reset process

④ →

RETURN

## Fig.9

## Fig.10

## Fig.11

## Fig.12

# Fig.13

●:Thermistor Immersed in Oil
□:Thermistor Not Immersed in Oil

EP 2 940 284 A1

Fig.14

```
                    ┌─────────────────┐
                    │      START      │
                    └────────┬────────┘
                             │  ~S301
                    ┌────────┴────────┐   NO
                    │ CNG tank pressure Pc ≥ ├──────────────────┐
                    │  determination tank    │                  │
                    │   pressure PcTh?        │                  │
                    └────────┬────────┘                          │
                          YES │  ~S302                           │
                    ┌────────┴────────┐   NO      ┌─────(7)      │
                    │ thermistor temperature Ta ├──┘             │
                    │ ≥ minimum temperature Tamin? │             │
                    └────────┬────────┘                          │
                          YES │                          ~S303   │
                             │                  ┌────────────────┐
                             │                  │  reset process │
                             │                  └───────┬────────┘
                             │  ~S304                    │
                    ┌────────┴────────┐   NO           (6)
                    │ determination permission │
                    │  minimum value DQmin ≤   │
                    │ flow amount increase rate DQ │
                    │ ≤ determination permission │
                    │   maximum value DQmax?     │
                    └────────┬────────┘
                          YES │  ~S305
                    ┌────────┴────────┐   NO
                    │ vehicle acceleration ΔV │
                    │ > acceleration determination │
                    │     value ΔVTh?          │
                    └────────┬────────┘
                          YES │  ~S306
                    ┌────────┴────────┐   NO
                    │ measurement counter │
                    │  value CNT4 = 0?    │
                    └────────┬────────┘
                          YES │  ~S307
                    ┌────────┴────────┐
                    │ measurement starting │
                    │ temperature Tas ← Ta │
                    └────────┬────────┘
```

- S309: CNT4 ≥ determination permission reference value CNT4Th?  NO → (7)
- S310: YES — measurement ending temperature Tae ← Ta
- S311: temperature change amount ΔTa ← (Tas−Tae)/CNT4
- S312: ΔTa < specified change amount ΔTaTh?  NO → S313: CNT3←0  YES → S314: oil-immersed counter value CNT3 ← CNT3+1
- S315: CNT3 ≥ oil-immersed determination value CNT3Th?  NO → ;  YES → S316: warning process
- S308: measurement counter value CNT4 ← CNT4+1

(6) → RETURN

(7)

28

## Fig.15

(a)
Velocity
V

P2    P2

(b)
CNG
Flow Amount
Qf

(c)
Thermistor
Temperature
Ta

Tas

Tas

Tae

Time

t41 t42    t43  t45    t46  t47
t44

# Fig.16

```
                    START

              S401
      CNG tank pressure Pc ≥              NO
      determination tank pressure PcTh?  ──────────────┐
              ↓ YES    S402                             │
       thermistor temperature Ta         NO            │
       ≥ minimum temperature Tamin?  ──────────────────┤
              ↓ YES    S403                             │
      flow amount increase rate DQ >     NO            │
      increase determination value DQTh? ──────────────┤
              ↓ YES    S405               ⑧  ──→ S404  │
      measurement counter value CNT5     NO      reset │
              = 0?  ───────────────┐           process │
              ↓ YES    S406        │                    │
         reference value Tab ← Ta  │                    │
              ↓                     │                    │
              ←─────────────────────┘                    │
              ↓          S407                             │
           CNT5←CNT5+1                                    │
              ↓          S408                             │
        temperature change                                │
        amount ΔTa ← Tab-Ta                               │
              ↓          S409                             │
      ΔTa1 ≥ decrease determination     NO               │
            value ΔTaiTh?  ──────────┐      S410         │
              ↓ YES                   │                   │
                                      ↓  CNT5 ≥ ending    │
                                         determination  NO│
                                         value CNT5Th2? ──┤
              ↓          S411              ↓ YES          │
      CNT5 > counter determination     NO                │
            value CNT5Th1?  ───────┐   S412              │
       ⑨ ──→ ↓ YES    S413        │  CNT3←0             │
        oil-immersed counter       │                    │
        value CNT3 ← CNT3+1        │                    │
              ↓          S414      │     ⑨              │
      CNT3 ≥ oil-immersed          NO                    ↓
      determination value CNT3Th? ──┐              RETURN
              ↓ YES    S415         │
         warning process            │
              ↓                     │
              ←─────────────────────┘
              ↓
              ⑧
```

# Fig.17

(a)
CNG Flow
Amount Qf

(b)
Thermistor
Temperature Ta
(in CNG)

(c)
Thermistor
Temperature Ta
(in oil)

Fig.18

<table>
<tr><td colspan="2"><b>INTERNATIONAL SEARCH REPORT</b></td><td colspan="2">International application No.<br>PCT/JP2013/080441</td></tr>
</table>

| A. CLASSIFICATION OF SUBJECT MATTER |
|---|
| *F02M21/02*(2006.01)i, *F02B43/00*(2006.01)i, *G01F23/22*(2006.01)n |

According to International Patent Classification (IPC) or to both national classification and IPC

| B. FIELDS SEARCHED |
|---|
| Minimum documentation searched (classification system followed by classification symbols)<br>F02M21/02, F02B43/00, G01F23/22 |

Documentation searched other than minimum documentation to the extent that such documents are included in the fields searched

| Jitsuyo Shinan Koho | 1922–1996 | Jitsuyo Shinan Toroku Koho | 1996–2013 |
|---|---|---|---|
| Kokai Jitsuyo Shinan Koho | 1971–2013 | Toroku Jitsuyo Shinan Koho | 1994–2013 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2000-230459 A (Hyundai Motor Co.),<br>22 August 2000 (22.08.2000),<br>paragraphs [0026], [0027]; fig. 1, 2<br>& US 6257210 B1 & KR 10-2000-0055660 A | 1–12 |
| A | JP 2005-134230 A (Fuji Electric Retail Systems Co., Ltd.),<br>26 May 2005 (26.05.2005),<br>fig. 6<br>(Family: none) | 1–12 |
| A | JP 5-312619 A (Toyota Motor Corp.),<br>22 November 1993 (22.11.1993),<br>fig. 5<br>(Family: none) | 1–12 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>20 November, 2013 (20.11.13) | Date of mailing of the international search report<br>03 December, 2013 (03.12.13) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 940 284 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5312619 A